# FASCICULE DE BREVET EUROPEEN

(11) **EP 2 807 818 B1**
(45) Date de publication et mention de la délivrance du brevet: **17.03.2021**
(21) Numéro de dépôt: 13710034.3
(22) Date de dépôt: 24.01.2013
(51) Int. Cl.: H04N 1/44, H04N 1/00, G06F 21/12, H04N 1/32

(54) **PROCÉDÉ DE TRANSMISSION DE DOCUMENTS ET/OU D'INFORMATIONS AVEC AUTHENTIFICATION PERENNE**
VERFAHREN ZUM ÜBERMITTELN VON DOKUMENTEN UND/ODER INFORMATIONEN MIT PERMANENTER AUTHENTIFIZIERUNG
METHOD FOR TRANSMITTING DOCUMENTS AND/OR INFORMATION WITH PERMANENT AUTHENTICATION

(30) Priorité: 26.01.2012 FR 1250742
(43) Date de publication de la demande: 03.12.2014
(73) Titulaire: Lahmi, Paul, 75015 Paris (FR)
(72) Inventeur: Lahmi, Paul, 75015 Paris (FR)
(74) Mandataire: IPAZ
(86) Numéro de dépôt international: PCT/IB2013/050608
(87) Numéro de publication internationale: WO 2013/111082

(56) Documents cités:
- EP-A1- 1 432 234
- WO-A1-00/19295
- WO-A1-00/57279
- WO-A1-96/31049
- US-B1- 7 299 408

## Description

L'invention concerne un procédé assurant la délivrance de copies authentifiées d'un document original grâce à l'utilisation de copies authentifiables. Elle est dans le prolongement d'une précédente invention, WO96/31049, qui elle concerne la notion de documents authentifiables consistant lors de l'impression de l'original à stocker une image électronique de celui-ci sur un serveur géré par l'émetteur du document, le lien entre les deux documents est assuré par deux éléments graphiques additionnels dénommés marque et règles insérés dans le document original imprimé.

Cette précédente invention a également trait à la notion de document classique qui ne comporte pas de marque et qui est donc reproduit librement sans nécessiter d'exploiter des règles insérées dans le document. Les documents sensibles comportent des marques et dans le cadre de reproduction respectant le procédé défini dans ce précédent brevet, celle-ci est activée uniquement après extraction et exploitation des règles afin de connaître les possibilités et restrictions de reproduction liées à ce document. Bien que notre brevet antérieur définisse quatre types principaux de documents sensibles, le présent brevet ne s'intéresse qu'aux documents sensibles de type authentifiables. L'originalité de la présente invention est de proposer une chaine d'authentification qui bien que réutilisant les acquis de notre précédent brevet propose un procédé plus complet et nouveau permettant de créer une chaine de transmission d'information authentique tout à fait nouvelle.

Le présent brevet introduit ainsi de nombreuses caractéristiques nouvelles en introduisant en particulier une détention unique des documents originaux sous forme électronique détenus dans un site de stockage sécurisé ou coffre-fort géré par un gestionnaire d'authentification. Tous les documents qui circulent en dehors de ce coffre-fort ne sont que des copies avec différents niveaux et caractéristiques d'authentification. La chaine de transmission créée par cette nouvelle invention permet à toute entité qui doit introduire dans son système d'information des données authentifiées de le faire par une liaison directe avec le coffre-fort, cet échange étant géré par avance et de façon précise par le destinataire initial de ces informations.

Nous devons tout d'abord définir les différents types de documents impactés par notre invention, en particulier nous pouvons faire une première distinction en considérant le média utilisé :
- Un **document matériel** est un document sous sa forme imprimée sur un média assimilable à du papier par tout moyen technique existant ou futur telle que, et de façon non limitative, une impression offset et/ou une impression obtenue par une imprimante pilotée par un système d'information éventuellement complété d'éléments additionnels tels des éléments manuscrits ainsi que toute combinaison de ces moyens. Le média pourra soit être du papier standard ou tout autre média pouvant supporter une telle impression afin d'obtenir un document physique. Le format n'a pas d'incidence sur cette définition : un document format A4 ou A3 (format standard européen), letter (format standard américain) ainsi que tout autre format standard ou non , recto simple ou recto-verso ou composé de plusieurs feuilles voire un livre reste un document papier y compris si le support (média) n'a rien à voir avec du papier : matière synthétique, métallique ou de toute composition
- Un **document électronique** à l'opposé du document matériel est immatériel. Il est soit :
   ∘ Sous forme d'un fichier informatique dans un format directement visualisable tel le format PDF et tel que l'impression de ce document produise un document matériel visuellement identique à ce document lorsqu'il est visualisé sur un écran de type informatique. De façon non limitative l'écran associé ou piloté par un ordinateur fixe ou portable ou de format tablette mobile ainsi que tout autre écran géré par une intelligence informatique tel que les écrans de téléphone intelligent -Smartphone.
   ∘ Sous forme d'un fichier de type déclaratif, tel par exemple un fichier XML, qui comporte dans ce cas un certain nombre de données et d'instructions de formatage. Ces éléments peuvent soit être définis explicitement dans le fichier ou de façon implicite via l'appel à des systèmes de données externes et l'utilisation d'algorithmes adaptés. Par extrapolation, un document peut se limiter à une collection d'informations à condition qu'une intelligence informatique soit capable par des algorithmes adaptés à produire soit un document électronique visualisable tel que défini précédemment ou un document matériel tel que défini précédemment en complétant ces données par des données complémentaires et/ou des opérations de formatage définies, gérées par cette intelligence informatique et/ou par un ou des systèmes d'informations tiers en relation avec celui-ci.
   ∘ Un document visualisé sur un écran informatique est à la foi assimilable à un document matériel lorsqu'il est associé à son support écran et un document électronique lorsqu'il est associé à un ficher de type informatique ou équivalent comme défini ci-dessus. Ainsi un document visualisé sur tout type d'écran est un document matériel lorsqu'il est par exemple soumis à une prise photographique ou vidéo par un dispositif tel qu'un téléphone intelligent par exemple. Il est par contre considéré comme un document électronique lorsque l'utilisateur qui le visualise décide de le sauvegarder ou de le transmettre via un système d'information.

De même nous pouvons définir quelles sont les différentes copies que l'on peut obtenir à partir d'un document en introduisant deux notions particulières liées à notre invention :
∘ Des **copies simples,** ces copies n'apportent aucune garantie d'authenticité à son détenteur si ce n'est la confiance de ce dernier dans la chaine de transmission qui a pu lui permettre d'acquérir cette copie.
∘ Des **copies authentifiées,** ces copies dans le cadre de notre invention sont des copies dont l'authenticité est garantie par notre invention en particulier à travers le processus de délivrance de ces copies. Dans l'art antérieur, y compris dans l'utilisation de système complexe de gestion documentaire et de coffres-forts électroniques, l'authenticité est garantie par des technologies d'encryptage complexes (scellement, signature électronique) ou par des chaines de transmission sécurisée avec introduction éventuelle de tiers de confiance. Toutefois dans ces technologies, l'acquisition finale d'un document authentique par son destinataire est désynchronisée de sa création ce qui permet de mettre en péril cette chaine par des faussaires avisés.
∘ Des **copies authentifiables,** ces copies permettent à son détenteur de permettre l'obtention et/ou la diffusion de copies authentifiées voire de copies authentifiables, les deux caractéristiques pouvant être cumulées, à un tiers. Cela à partir d'un document matériel et/ou d'un document électronique. Notre invention permet dans ce processus de contrôler parfaitement la nature de l'information diffusée et sa diffusion en fonction de la volonté réelle du détenteur, ce que ne permet pas l'état de l'art actuel.

Ainsi nous pouvons reprendre les définitions de notre précédent brevet en les adaptant au contexte particulier de la présente invention.

L'élément **marque** permet à un système de reproduction intégrant une technologie adaptée de détecter le caractère sensible du document soumis à la reproduction. Dans le cadre de notre précédente invention, quatre types de documents sensibles ont été définis, les documents authentifiables étant l'une de ces quatre catégories.

Suivant un mode de réalisation de la présente invention, les documents authentifiables représentent le seul type de documents sensibles intégrant l'élément marque ; dans ce cas, il y a équivalence entre document sensible et document authentifiable. Dans le cadre de la présente invention, un document authentifiable est nécessairement une copie authentifiable car les originaux ne sont jamais soumis à une reproduction directe puisque conservés dans des coffres-forts. Seul le terme copie authentifiable sera utilisé pour la suite en lieu et place de document authentifiable.

Suivant un autre mode de réalisation de la présente invention, il peut y avoir multiplicité de définitions de marques sans pour autant que celle-ci se substitue aux règles. Une marque permet uniquement de caractériser un document comme document sensible. Dans ce mode de réalisation, une ou plusieurs définitions de marques peuvent être réservées exclusivement aux copies authentifiables. Dans ce cas la détection d'une de ces définitions permet de déterminer que le document est une copie authentifiable. Les restrictions d'obtention de copies, et particulièrement de copies authentifiées sont alors définies par extraction et interprétation des règles. Les différents types de marques peuvent également être adaptés au type du document : la marque sur un document qui ne comporte que du texte pourra être différente de celle qui ne comporte que des images.

Dans le cas d'un document matériel, les marques sont des éléments graphiques intégrés au graphisme général du document et pouvant être détectées après une phase de numérisation de ce document et par recherche directe dans le résultat de cette numérisation. La numérisation d'un document papier consiste à modéliser un document en un ensemble de points ou équivalents avec des attributs particuliers pour chacune d'eux tels que des attributs de couleur. Le résultat de cette numérisation permet de transformer ce document matériel en un document électronique pouvant faire l'objet de traitements informatiques adaptés tels que par exemple la possibilité de visualiser ce document sur un écran de type informatique. Il existe aujourd'hui de nombreuses méthodes pour modéliser un document matériel après numérisation, on peut citer de façon non limitative les formats suivants : TIFF, JPEG, PDF.

Dans le cas d'un document électronique, la marque peut être intégrée comme un attribut spécifique comme par exemple la définition d'une valeur informatique stockée dans le corps du document électronique ou dans une zone dédiée. Elle peut aussi être définie comme une variation particulière des données stockées dans le document comme par exemple :
- L'utilisation d'une police particulière ou de certains caractères particuliers possédant des graphismes similaires à des caractères standards mais légèrement déformés et utilisant une position spécifique dans la police. Dans le cas d'intégration d'image, des modifications particulière de l'encodage de l'image qui ne modifient pas ou modifient peu la visualisation de celle-ci mais détectable par un algorithme particulier (technique de tatouage graphique).
- Toute modification de l'encodage du document qui modifie peu ou pas la visualisation du document proprement dit ou son impression.

Dans tous les exemples précités, l'insertion des marques dans le document électronique est effectuée de façon à ce que lors de l'impression de ce document, ces marques produisent des marques sous forme graphique dans le document matériel obtenu avec un processus d'impression standard. Dans un mode de réalisation particulier de l'invention, l'obtention d'un document matériel possédant des marques à partir d'un document électronique intégrant des marques est réalisée avec un processus d'impression spécifique à l'invention.

L'élément règles permet au système de reproduction de définir les règles et restrictions de reproduction associées au document soumis à la reproduction. Dans le cas des copies authentifiables, ces informations peuvent inclure non exclusivement des informations de référencement permettant d'atteindre les informations préalablement stockées associées au document soumis à une reproduction permettant la production d'une copie authentifiée dans les limites et restrictions qui lui sont attachées, les règles peuvent également se définir de façon complémentaire aux autres éléments de référencement classiquement insérés dans le document sous forme par exemple de codes à barres à une ou deux dimensions, voire des données insérées sous forme visuellement exploitables tel qu'un numéro de contrat. Rappelons que la référence d'un document classiquement définie dans une entité ne permet de référencer que l'original proprement dit et aucunement ses copies surtout dans un contexte de délivrance d'authentification tel que défini dans la présente invention.

Toute information de type informatique, c'est-à-dire pouvant être traitée par un algorithme de type informatique afin de permettre à cette algorithme de répondre à un requête de reproduction sur un document authentifiable afin d'obtenir une ou des copies authentifiables et/ou une ou des copies authentifiées comme cela sera défini dans la suite du brevet est dénommé **règles** pour la suite. Ces règles sont définies graphiquement sur un document matériel. Pour un document électronique, celles-ci sont définies librement à condition que toute obtention d'un document matériel authentifiable à partir de ce média intègre des règles définies graphiquement avec un processus d'impression standard. Dans un mode de réalisation particulier de l'invention, l'obtention d'un document matériel possédant des règles à partir d'un document électronique intégrant des règles est réalisée avec un processus d'impression spécifique à l'invention.

Lorsqu'une copie authentifiée intègre marque et règles, cette copie peut alors être considérée comme une copie authentifiable puisqu'elle permet d'avoir un retour d'information de la part du système complet que constitue notre invention.

Les marques et les règles peuvent être soient deux éléments complètement distincts soient confondus en un même élément global sous la condition que l'algorithme de détection correspondant puisse détecter le caractère sensible du document qui est associé à la détection des marques préalablement à la détection et le décodage/décryptage des règles dans des étapes indépendantes. L'algorithme doit ainsi être en mesure de détecter que le document est «sensible même en cas de décodage/décryptage infructueux des règles, voire de non succès de la détection de celles-ci.

Dans le cas d'un document matériel, ces éléments sont graphiques, c'est-à-dire insérés dans le graphisme du document imprimé en utilisant les mêmes techniques d'impression que pour la partie utile de celui-ci (texte, graphiques, images, etc.).

Ce mécanisme s'applique également à un document électronique. Pour un document électronique, les marques et les règles sont matérialisées soit par des données de type informatique soit par des modifications et/ou altérations de celui-ci correspondant après impression à des éléments graphiques sous la condition que ces modifications et/ou altérations puissent être traitées et/ou décodées et/ou décryptées par un algorithme de type informatique.

Le présent procédé a pour but, en s'appuyant entre autres sur les acquis de ces brevets, d'élargir les applications de sécurisation lors de la transmission de copies authentifiables en autorisant le possesseur réel ou virtuel d'une copie authentifiable de transmettre toute ou partie de l'information présente ou future attachée à ce document suivant des contraintes qu'il pourra définir et contrôler précisément. Le brevet s'attachant à ce que les contraintes définies soient respectées dans toute utilisation par un tiers des documents et/ou informations transmises.

Le fait de pouvoir paramétrer l'accessibilité des informations accessibles à partir de la transmission d'un document dans un contexte d'authentification est nouveau, en particulier le fait qu'à partir de la possession et/ou de l'accès à une copie authentifiable, un détenteur puisse transmettre une copie spécifique à un tiers dont les possibilités d'utilisation et de transmission d'informations lors de la réception de ce document et à postériori puissent être spécifiquement définies par celui-ci en fonction de ses propres volonté de diffusion et de celles du tiers, les mécanismes d'utilisation du document transmis respectant ces définitions. La copie ainsi produite au lieu d'être inerte est le vecteur de transfert d'informations sous complet contrôle de l'émetteur du document original et de l'ordonnateur de la copie. Plusieurs copies en apparence identiques d'un même document original peuvent ainsi être toutes différentes au niveau de la transmission d'information.

Les documents concernés sont par exemple tous les documents administratifs émanant d'une administration ainsi que tout document produit par une entreprise publique ou privée, que ces documents soit produits sous forme de document papier et/ou document électronique. A titre d'exemple non limitatif, on peut citer :
- les factures, les bons de commande,
- les fiches de paie, les contrats,
- les attestations, les documents fiscaux, les documents comptables,
- les documents médicaux,
- les documents techniques, les modes d'emploi et manuels utilisateurs
- ...

### Définitions

Pour la suite, pour simplifier la description de l'invention, nous effectuons les définitions suivantes complémentaires des définitions précédentes qui incluent également des caractéristiques essentielles de l'invention :
- Tout document considéré par son créateur ou par celui qui le possède comme un seul et même document, qu'il soit document matériel ou document électronique est dénommé de façon globale **document unitaire** pour la suite.
- Tout système de stockage qui apporte une garantie d'authenticité de l'information stockée quelque soit l'organisme qui le gère et indépendamment du niveau de sécurité et de garantie d'authenticité apportée à ce stockage est dénommé **coffre-fort** pour la suite. Un des buts de cette invention est que toute authentification délivrée par un tel coffre-fort puisse être considérée comme infaillible y compris dans les modèles d'authentification complexes accessibles par l'invention.

- Tout document électronique stocké dans un coffre-fort dans un but d'en obtenir des authentifications tel que cela sera défini dans l'invention est dénommé **document original** pour la suite. Cela a pour conséquence, dans le cadre de l'invention, que tout document matériel n'est pas un document original mais peut être potentiellement authentifié ou authentifiable suivant les définitions qui sont fournies ci-après.
- L'émetteur d'un document original est dénommé par la suite **entité émettrice.** Cette notion inclue l'émetteur proprement dit du document original ainsi que tout organisme tiers gérant cette action pour celui-ci.
- Toute entité qui gère un coffre-fort contenant des documents originaux en vue de délivrer des copies de ces documents originaux à une ou à des entités avec une garantie d'authenticité est dénommée **entité de gestion d'authentification** par la suite. Un des buts de la présente invention est de garantir cette authenticité. L'entité de gestion d'authentification peut se confondre ou non avec l'entité émettrice.
- Pour chaque document original, l'entité de gestion d'authentification peut délivrer plusieurs types de copies. Les différents types de copies énumérés ci-après peuvent être délivrés soit sous frome de document matériel soit sous forme de document électronique. La notion de copie, en particulier en terme de contenu comparativement à celui du document original correspondant est défini dans l'invention. Comme indiqué précédemment, les différents types de copies sont :
   ∘ Des **copies simples,** ces copies sont produites à partir d'un document original mais n'apporte aucune garantie d'authenticité à son détenteur si ce n'est la confiance de ce dernier dans la chaine de transmission qui a pu lui permettre d'acquérir cette copie.
   ∘ Des **copies authentifiées,** ces copies sont produites par l'entité de gestion d'authentification à partir d'un document original et l'authenticité de la copie authentifiée est garantie par l'entité de gestion d'authentification suivant un mode propre à l'invention qui sera décrit ci-après. Le mode d'obtention d'une telle copie sera également décrit dans l'invention. Une copie simple n'est pas une copie authentifiée.
   ∘ Des **copies authentifiables,** ces copies sont produites par l'entité de gestion d'authentification et permettent à leur détenteur de requérir de nouvelles copies que celle-ci soient des copies simples, des copies authentifiées ou des copies authentifiables. La notion de copie authentifiée est indépendante de la notion de copie authentifiable : une copie authentifiée peut être ou ne pas être une copie authentifiable de même qu'une copie authentifiable peut être ou ne pas être une copie authentifiée. Une copie simple n'est pas une copie authentifiable. Il faut distinguer dans cette catégorie les copies authentifiables permettant elle-même d'obtenir d'autres copies authentifiables avec des caractéristiques identiques ou différentes de la copie authentifiable d'origine de celles ne permettant que d'obtenir des copies authentifiées. Les premières, celles permettant d'obtenir d'autres copies authentifiables, en général réservées aux unités détentrices telle que cela sera défini ci-après, sont dénommées **copies authentifiables de détention.** Les autres, celles n'autorisant que d'obtenir des copies authentifiées sont dénommées **copies authentifiables** de **transmission.** Une copie authentifiable intègre des marques et des règles comme cela a été défini précédemment, en particulier en fonction du type de document : document matériel ou document électronique.
   ∘ Toute copie authentifiable possède une identité propre définie par les informations contenues dans les règles et en particulier les informations de référencement que celles-ci incluent. Deux copies authentifiables matériellement différentes telles que deux documents matériels différents ou deux documents électroniques différents ou un document matériel et un document électronique sont considérés comme deux exemplaires matériels d'une seule et même copie authentifiable si ces deux documents possèdent des règles identiques. Cette unicité peut dans certains cas être jugée en couplant les règles à la référence intrinsèque du document original de référence. Le nombre d'exemplaires matériels d'une même copie authentifiable n'est pas limité. La multiplicité possible des exemplaires matériels d'une même copie authentifiable n'influe pas sur les possibilités et restrictions de reproduction dans un cadre d'authentification de cette copie authentifiable. Suivant un mode de réalisation particulière de l'invention, la coexistence de deux ou plusieurs copies matérielles peut être interdite ou contrôlée soit de façon globale, soit par l'entité émettrice, soit par l'entité détentrice soit par toute autre entité ou combinaisons d'entités impliquées directement ou indirectement dans le processus global d'authentification lié à cette copie authentifiable. La détection de l'existence d'un nombre de copies matérielles d'une même copie authentifiable non conforme à ce qui est défini ou imposé peut entrainer toute action de sécurité définie à l'avance ou lors de la détection de cette multiplicité non autorisée. La détection de la multiplicité de copies matérielles d'une même copie authentifiable peut être fortuit ou résulter de recoupements humains et/ou informatiques dont la définition est de la responsabilité des entités impliquées dans le processus global d'authentification. A titre d'exemple, l'utilisation d'une même copie authentifiable à deux endroits géographiques distincts éventuellement matérialisés par des paramètres informatiques tels que des numéros IP ou des positions GPS dans un intervalle de temps ne permettant pas l'utilisation d'une seule copie matérielle permet une telle détection dans le cas où il n'est pas autorisé d'avoir plus qu'une seule copie matérielle d'une même copie authentifiable.
   ∘ En dehors des marques et des règles, le contenu réel d'une copie authentifiable peut diverger de celui du document original auquel il est attaché. Ce contenu peu contenir tout ou partie du contenu du document original associé et peut contenir en complément un contenu disjoint de celui du document original associé.
   ∘ De nombreux organismes ne souhaitent plus transmettre des copies des documents produits à des entités externes mais simplement les aviser de la disponibilité du document produit via un accès prédéfini. Par exemple un fournisseur de téléphonie mobile plutôt que de transmettre la facture mensuelle à son client mettra celle-ci à disposition sur un site internet accessible à celui-ci via éventuellement un accès identifié. Le client pourra ou non être averti de cette mise à disposition par un courrier électronique (Email) ou un message téléphonique (SMS). Si l'émission de cette facture est périodique, le fournisseur pourra par exemple ne pas avertir le client considérant que ce dernier connait cette périodicité. Cet accès offert au destinataire, qu'il soit accompagné ou non d'un avis joue le rôle de copie, puisque grâce à celui-ci, le destinataire peut accéder quand il le veut à son document (facture ou autre) comme il le ferait avec une copie transmise par courrier traditionnel, celui-ci est dénommé **accès à l'original** pour la suite.
   ∘ Pour regrouper dans une même catégorie les accès à l'original et les copies authentifiables de détention qui les deux permettent principalement à une entité détentrice d'obtenir de nouvelles copies authentifiables, de préférence mais non exclusivement des copies authentifiables de transmission sont dénommés **clé d'accès détenteur à l'original** pour la suite.
- L'entité qui possède une copie authentifiable est dénommée **entité détentrice.** Cette définition est également applicable lorsque l'entité ne possède pas de copie authentifiable mais dispose d'un moyen pour s'en procurer. L'invention décrit de tel processus pour obtenir une copie authentifiable.
- Toute entité qui requiert de la part d'une entité détentrice une copie authentifiée ou une copie authentifiable d'un document original dont celle-ci possède une copie authentifiable ou en mesure d'en posséder est dénommée **entité requérante.**
- Lorsque des liens de dépendance sont créés à partir de certains documents originaux sur un document original particulier, ce dernier est dénommé **document original de référence.** Il peut y avoir ou non réciprocité dans la notion de document original de référence : suivant le processus de reproduction en cours, un document original peut être rattaché à un document original de référence, cette notion peut alors être inversée dans un autre processus de reproduction. Cela peut être en particulier le cas lorsqu'il existe plusieurs versions d'un même document comme cela est défini ci-après.
- Pour un document original de référence, tout autre document original qui est considéré par son entité émettrice comme une version différente de ce document original de référence que cette version soit créée avant, après ou simultanément à ce document original de référence est dénommée **autre version originale.** Suivant un mode particulier de réalisation de l'invention, la notion d'autre version originale d'un document original de référence peut être établie par toute autre entité que l'entité émettrice et/ou de façon désynchronisée avec la création des différentes autres versions originales associées au document original de référence. Cela signifie en particulier qu'une entité distincte de l'entité émettrice du document original de référence peut créer une autre version originale associée à ce document original de référence. Cela signifie également que la création d'un document original et sa qualification comme autre version originale associée à un document original de référence sont deux opérations pouvant être indépendantes en particulier au niveau de la chronologie de la définition et de la création. Un document original peut être défini comme autre version originale par une entité qui n'est pas son entité émettrice, cela peut être en particulier applicable à l'entité de gestion d'authentification.
- Pour un document original, tout autre document original qui est considéré par son entité émettrice comme une variante de ce document original est dénommé **autre variante originale** pour la suite. On peut citer de façon non limitative comme autre variante originale d'un document unitaire original une même version de ce document dans une autre langue ou le même document mais adressé à des populations différentes et donc avec des compositions adaptées en fonction de ces différentes populations. Cela est aussi le cas, pour un document de type financier tel qu'une facture, de sa présentation sous différents formats afin de la rendre compatible avec le système d'information de l'unité requérante, cela est particulièrement vrai pour les documents électroniques. Un document unitaire original peut être défini comme autre variante originale par une entité qui n'est pas son entité émettrice, cela peut être en particulier applicable à l'entité de gestion d'authentification.
- Pour un document unitaire original, tout autre document original qui est considéré par son entité émettrice comme un document connexe à celui-ci est dénommé **document original connexe** par la suite. Cela peut-être par exemple un avoir ou un récépissé de remboursement, si le document original associé est une facture Cela peut-être un avis de rupture ou de modification de contrat de travail si le document initial est une fiche de paie, etc ... Un document unitaire original peut être défini comme document original connexe par une entité qui n'est pas son entité émettrice, cela peut être en particulier applicable à l'entité de gestion d'authentification. Suivant un mode particulier de l'invention, un document original connexe peut se limiter à une donnée ou à un ensemble de données structurées ou non, tel qu'une nouvelle adresse, une indication de variation de montants dans une facturation mensuelle, une rupture de contrat, etc.
- Tout dispositif matériel permettant à partir d'une copie authentifiable sous forme de document matériel d'obtenir un nouveau document authentifiable et/ou un nouveau document authentifié est dénommé **système de reproduction adapté** par la suite. Le document obtenu peut-être un document matériel et/ou un document électronique, de même une pluralité de ces documents peuvent être obtenus. Un simple scanner ou numériseur, piloté par une intelligence informatique est également considéré comme un système de reproduction car le résultat de la numérisation permet d'obtenir une copie sous forme de document matériel en y association une imprimante adaptée ou sous forme de document électronique en utilisant les outils logiciels et informatiques adaptés. Un scanner ainsi défini piloté par une intelligence informatique lui permettant à partir d'un document authentifiable d'obtenir un nouveau document authentifiable et/ou un nouveau document authentifié est aussi considéré comme un système de reproduction adapté. L'obtention des copies authentifiées et/ou des copies authentifiables à partir d'un système de reproduction adapté sont décrits dans la présente invention.

- Une copie authentifiable sous forme de document électronique peut être soumis à un processus de reproduction via un outil informatique spécifique capable de détecter le caractère authentifiable et donc sensible du document électronique qui lui est soumis par identification des marques qui y sont intégrées et de connaître quelles sont les possibilités et restrictions de reproduction associé à ce document par recherche et décryptage des règles qui y sont insérées. Un tel logiciel permet d'obtenir une ou des copies authentifiables et/ou une ou des copies authentifiables à partir de la copie authentifiable sous forme de document électronique ou sous forme de documents matériels. Un tel logiciel est dénommés **logiciel de reproduction adapté** par la suite. Toute copie authentifiable ou copie authentifiée obtenue par un logiciel de reproduction adapté à partir d'une copie authentifiable est une nouvelle copie qui a des règles qui lui sont propres lorsqu'il s'agit d'une copie authentifiable et donc différentes de celle de la copie authentifiable qui a permis de la générer. Dans le cas où plusieurs copies matérielles d'une même copie authentifiables sont autorisées, ces copies peuvent être obtenues soit par un logiciel de reproduction adapté ainsi que par tout logiciel de reproduction standard (c'est-à-dire non spécifiquement adapté à l'invention) ou tout logiciel d'impression standard sous la condition que ces logiciels conservent dans le processus de copie ou d'impression l'existence des marques et des règles dans la copie produite. Dans le cas où plusieurs copies matérielles d'une même copie authentifiables ne sont pas autorisées, mais que des logiciels de reproduction ou d'impression standard ou spécifiquement adapté par un tiers permettent une telle multiplicité des copies matérielles d'une même copie authentifiable, l'interdiction sera gérée à travers l'usage de ces différentes copies matérielles.
- Les téléphones mobiles intelligents (Smartphones), les tablettes (tactiles ou avec clavier) et les PDA (Personal Digital Assistant) ont des puissances de calcul de plus en plus élevées permettant d'intégrer des applications habituellement hébergées sur des dispositifs informatiques plus puissants comme les PC (Personal Computer). En plus de cette intelligence informatique, ces appareils disposent d'un objectif photographique permettant la prise de photo et/ou la prise de vidéos à des résolutions de plus en plus élevées (8 Megapixels et plus pour la partie photographique). Il est vraisemblable que de nouveaux modèles voire de nouveau types d'appareils regrouperont également intelligence informatique et capacité photographique/vidéo. Les photos ou vidéos prises par tous ces appareils, présents et futurs, de documents sécurisés peuvent être soumise à des traitements de type informatique en utilisant soit la puissance de calcul embarquée par ces dispositifs soit une intelligence connectée (fonctionnement en SaaS, Software as a Service). Moyennant des technologies maitrisées par l'homme de l'art l'image (photographie) ou la série d'images (vidéo) fournies par ces dispositifs peuvent être traitées afin d'avoir une vue partielle du document faisant l'objet de la prise de vue de qualité comparable à celle obtenue par un numériseur (scanner) et donc avec la capacité d'en détecter les marques et d'en extraire les règles et par conséquent d'identifier le caractère authentifiable d'un document et de procéder à une demande de copie authentifiable et/ou une demande de copie authentifiée dans le respect du cadre de l'invention. Ces appareils possédant pour la plupart des moyens de connexion réseau (de façon non exhaustive connexion Internet de type Wifi, Edge, 3G,...) peuvent assumer ces demandes comme elle pourrait le faire à partir d'un système de reproduction adapté. Ces appareils seront dénommés **Interface de mobilité adapté** pour la suite lorsqu'ils ont la capacité à partir d'un document papier lui-même copie authentifiable d'obtenir dans le cadre de l'invention une ou des copies authentifiables et/ou une ou des copies authentifiées. Cette possibilité est également offerte, lorsque le cadre technique l'autorise à partir de l'image d'une copie authentifiable sur un écran qui suivant les définitions de notre brevet est dans ce cas également un document matériel. Ce type d'équipement a également la possibilité d'exploiter des documents électroniques, lorsque ces documents sont des documents authentifiables et que cet équipement a la possibilité à partir de tels documents de produire une ou des copies authentifiées et/ou une ou des copies authentifiables, l'équipement est alors considéré comme un logiciel de reproduction adapté dans le cadre de l'invention.
- Pour obtenir une copie authentifiable et/ou une copie authentifiée, une entité détentrice peut solliciter un service spécialisé tel qu'un site Internet qui l'autorisera suivant certaines conditions d'authentification (login/mot de passe par exemple, identification adresse IP, etc) d'accéder à certaines informations structurées elles-mêmes considérées comme des documents unitaires originaux. A partir de ces documents unitaires originaux et de ce service spécialisé, l'entité détentrice pourra requérir également une copie authentifiable et/ou une copie authentifiée comme elle pourrait le faire à partir d'un système de reproduction adapté. Dans ce cas, ce service spécialisé est dénommé **système d'accès distant adapté.**
- Pour regrouper dans une même entité les systèmes de reproduction adaptés, les interfaces de mobilité et les systèmes d'accès distant adaptés, nous regroupons ces trois entités sous une dénomination commune : **systèmes de délivrance d'authentification.**

Le procédé revendiqué est adapté pour gérer toute opération d'authentification sur tout type de document, document papier et/ou document électronique. L'authentification résultante de ce procédé quelque soit la source, document papier et/ou document électronique est produite elle-même sous forme de document papier et/ou sous forme de document électronique, sous forme de document et/ou sous forme d'informations exploitables par un système d'information.

Le procédé exposé dans la présente invention intègre ce qui était déjà défini dans l'art antérieur avec plusieurs fonctionnalités nouvelles et en particulier seules des copies authentifiables permettent l'obtention de copies authentifiées. Ni les copies authentifiables ni les copies authentifiées ne sont des documents originaux. Le nouveau procédé fait intervenir trois acteurs au lieu des deux indiqués dans le brevet antérieur que sont l'émetteur et le détenteur de l'original authentifiable. Dans le procédé objet de la présente invention, l'entité requérante est le troisième acteur, alors que le détenteur de l'original est remplacé par l'entité détentrice qui n'est plus en possession d'un original mais uniquement d'une clé d'accès à l'original.

Toute entité émettrice qui produit un document original le stocke dans un coffre-fort dont la gestion est assurée par une entité de gestion d'authentification que celle-ci soit indépendante ou non de l'entité émettrice. Simultanément à cette opération ou postérieurement à celle-ci, l'entité émettrice émet une clé d'accès détenteur à l'original à l'unité détentrice ou à plusieurs entités détentrices, dans des cas particuliers cette clé d'accès détenteur à l'original peut être transmise et/ou créée avant la création du document original en particulier lorsque la clé d'accès détenteur à l'original est de type accès à l'original. A chaque demande de copie authentifiée d'un document original par une entité requérante à l'unité détentrice, l'unité détentrice sollicitée, via sa clé d'accès détenteur à l'original, requiert auprès de l'entité de gestion d'authentification une copie authentifiable de transmission suivant un mode propre à l'invention décrit ci-après, la requête est effectuée par l'entité détentrice à l'entité de gestion d'authentification indirectement en utilisant un système de délivrance d'authentification adapté à la nature de la clé d'accès détenteur à l'original détenue par cette entité détentrice. La copie authentifiable de transmission est produite alors par l'entité de gestion d'authentification puis transmise à l'entité détentrice ou directement à l'entité requérante via le système de délivrance d'authentification. Dans le cas où la copie authentifiable de transmission est délivrée à l'entité détentrice, celle-ci la transmet à l'entité requérante. L'entité requérante via sa copie authentifiable de transmission peut alors solliciter, via un mode propre à l'invention décrit ci-après, l'entité de gestion d'authentification pour obtenir directement de celle-ci une ou des copies authentifiées.

Pour obtenir une copie authentifiable de transmission d'un document original désigné, l'entité détentrice utilise sa clé d'accès détenteur à l'original associé au document original désigné. Dans le cas où la clé d'accès détenteur à l'original est une copie authentifiable de détention, Celle-ci est alors soumise à un système de reproduction adapté. Celui-ci identifie son caractère de copie authentifiable par la détection des marques. Une fois ce caractère déterminé, les règles sont recherchées afin de déterminer les caractéristiques d'authentification accessibles à partir de cette copie authentifiable. L'entité détentrice définit les caractéristiques de la ou des copies authentifiables de transmission qu'il désire obtenir, ces caractéristiques sont définies par l'entité détentrice en fonction des caractéristiques des demandes des entités requérante, de sa propre volonté et des limites et possibilités liées à la copie authentifiable de détention qu'il présente au système de reproduction adapté. Cette demande est transmise et traitée par l'entité de gestion d'authentification qui construit des règles adaptées pour le ou les documents produits. Ces règles permettent de définir les capacités d'authentification de ce document soit de façon autonome soit en coordination avec des informations complémentaires accessibles par l'entité de gestion d'authentification que ces informations ait été créées ou non par cette entité, éventuellement complémentaires à d'autres données insérées naturellement dans le document sous une forme visuellement accessible ou non. Dans le cas où la clé d'accès détenteur à l'original est un accès à l'original , l'entité détentrice utilise un système d'accès distant adapté qui lui permet d'accéder au document original désigné et de définir dans les mêmes conditions que précédemment une copie authentifiable de transmission adapté à la demande de l'entité requérante, de sa propre volonté et des limites et possibilités liées au document original définies par le système de gestion d'authentification dépendant de divers paramètres dont ceux définissant l'entité détentrice. Ce système de gestion d'authentification créée les règles du document à produire comme dans le cas d'obtention à partir d'une copie authentifiable de détention. Dans les deux cas, la ou les copies authentifiables de transmission sont produites avec des marques pour être identifiées comme des documents authentifiables et les règles construites par le système de gestion d'authentification.

Pour obtenir une copie authentifiée d'un document original désigné, l'entité requérante utilise sa copie authentifiable de transmission associée au document original désigné. Celui-ci est alors soumis à un système de reproduction adapté. Celui-ci identifie son caractère de copie authentifiable par la détection des marques. Une fois ce caractère déterminé, les règles sont recherchées afin de déterminer les caractéristiques d'authentification accessibles à partir de cette copie authentifiable. L'entité requérante définit les caractéristiques de la ou des copies authentifiées qu'il désire obtenir, ces caractéristiques sont définies par l'entité requérante en fonction des limites et possibilités de la copie authentifiable de transmission définies par l'entité détentrice et de sa propre volonté. Cette demande est transmise par la système de reproduction adapté à l'entité de gestion d'authentification qui produit le ou les copies authentifiées requises dans les limites permises définies directement ou indirectement pour la copie authentifiable de transmission. L'entité de gestion d'authentification via le système de délivrance d'authentification transmet le ou les copies authentifiées requises à l'entité requérante ou suivant un mode particulier de l'invention à des entités définies par celles-ci.

Dans tous les cas où une copie authentifiable est utilisée pour obtenir des copies authentifiables et/ou des copies authentifiées, le système de reproduction adapté peut être remplacé par une interface de mobilité adapté avec des résultats équivalents.

Lorsque l'entité émettrice créé par rapport à un document original de référence une autre version originale ou une autre variante originale ou un document original connexe les stocke dans le coffre-fort comme pour un document original classique. Parallèlement à cette action, indépendamment ou non de toute chronologie, définit les liens qui permettent de rattacher ce nouveau document original du document original de référence. Ces informations sont transmises par l'entité émettrice à l'entité de gestion d'authentification. Suivant un mode particulier de l'invention, ces définitions et transmissions peuvent être également effectuées par une entité autre que l'entité émettrice du document original de référence. L'entité de gestion d'authentification examine alors les informations de gestion des documents unitaires originaux et des copies délivrées afin de désigner des entités requérante éligibles pour recevoir des copies authentifiées de ces nouveaux documents originaux et délivre ces copies via des systèmes de délivrance d'authentification. Suivant un mode particulier de réalisation de l'invention, ces copies peuvent également être produites à l'unité détentrice de copies authentifiables du document original de référence et/ou également à de nouvelles entités définies par l'entité de gestion d'authentification sans que celles-ci soient des entités requérantes par rapport au document original de référence.

Chaque document authentifiable est un élément unique, ou potentiellement unique, indépendamment de l'unicité de l'information véhiculée. Deux copies authentifiables différentes donnant accès à la même information et dans les mêmes conditions sont potentiellement deux documents différents. En particulier la copie authentifiable produite à partir d'une autre copie authentifiable est potentiellement une copie distincte de celle-ci dans le sens où en particulier les règles de la copie produite diffèrent de celles de la copie authentifiable initiale.

Les copies authentifiables produites utilisent lorsque le document produit est sous forme d'un document matériel ou sous forme de document électronique des marques et des règles sous forme graphique ou sous forme électronique comme défini préalablement. Il est possible à partir d'une copie authentifiable sous forme de document matériel d'obtenir via numérisation une copie authentifiable sous forme de document électronique équivalent sous condition que le processus de numérisation intègre la reconnaissance des marques et des règles graphiques et transforme ces éléments en éléments équivalents électroniques. Il est également possible à partir d'une copie authentifiable sous forme de document électronique d'obtenir via impression une copie authentifiable sous forme de document matériel équivalent sous condition que le processus d'impression intègre la transformation des marques et des règles électroniques en éléments équivalents graphiques. Dans ce cas les deux copies authentifiables sont considérées comme identiques, c'est-à-dire possédant des règles leur permettant d'obtenir les mêmes copies authentifiées. Suivant un autre mode de réalisation de l'invention, les deux copies authentifiables ainsi définies que ce soit par processus de numérisation ou d'impression sont considérées comme deux copies authentifiables distinctes. La possibilité de transformation d'une copie authentifiable de document matériel à document électronique ou inversement permet à l'unité détentrice lorsqu'elle requière une copie authentifiable d'un document unitaire original en sa possession de pouvoir la transmettre à l'unité requérante dans tout format à sa convenance indépendamment du format de la copie authentifiable initialement obtenue. Les éléments marques et règles utilisent une ou des technologies qui sont compatibles avec ces deux types de médias, papier et électronique.

Un des modes de réalisation préféré de l'invention pour les marques et les règles est de superposer une information binaire sur les différentes parties constitutives du document. Il existe déjà des technologies pour superposer de telles informations sur des images (tatouage numérique). Pour les parties textes, qui sont d'une importance particulière dans le cadre des documents pour lesquels une authentification peut être requise, l'information binaire peut être encodée par le biais des caractéristiques du texte. Cet encodage peut, de façon non limitative, utiliser des variations par exemple du niveau de gris utilisé, des variations de l'espacement des caractères, de leur taille ou de leur position par rapport à la ligne de base. Il appartient à l'homme de l'art de concevoir une technologie permettant un tel encodage. En définissant un encodage suffisamment dense, il est possible de pouvoir encoder une règle entière sur une seule ligne dans le cas de zone purement textuelle ou dans une seule partie d'image. Dans ce cas, cette règle peut être découpée en plusieurs sous parties pouvant chacune être décodée séparément. Ces sous-parties sont alors réparties sur la copie authentifiable afin d'obtenir une probabilité forte que chacune des sous parties de règles ainsi définies soit présente dans un extrait suffisamment significatif du document correspondant à une photo ou à un balayage vidéo effectué par un interface de mobilité adapté afin que ce dernier puisse permettre la délivrance de copies authentifiables et/ou de copies authentifiées à partir d'une copie authentifiable ainsi définie.

### Schémas :

- Le schéma 1 illustre le procédé complet d'obtention de copies authentifiées.
- Le schéma 2 illustre la partie création d'un document original et de la création correspondante de la clé d'accès à l'original, ce schéma est extrait du schéma global 1.
- Le schéma 3A illustre le processus général de création d'une copie authentifiable de transmission à partir d'une clé d'accès à l'original Ce schéma s'insère dans le schéma global 1.
- Le schéma 3B illustre le processus de création d'une copie authentifiable de transmission à partir d'une copie authentifiable de détention sous forme de document matériel. Pour ce schéma, la copie authentifiable de transmission est produite à destination de l'entité détentrice qui se charge de sa transmission à l'entité requérante. Ce schéma est une adaptation du schéma 3A à cette configuration particulière. Ce schéma est applicable également en remplaçant le système de reproduction adapté par une interface de mobilité adaptée.
- Le schéma 3C illustre le processus de création d'une copie authentifiable de transmission à partir d'une copie authentifiable de détention sous forme de document matériel. Pour ce schéma, la copie authentifiable de transmission est directement produite à destination l'entité requérante. Ce schéma est une adaptation du schéma 3A à cette configuration particulière. Ce schéma est applicable également en remplaçant le système de reproduction adapté par une interface de mobilité adapté.
- Le schéma 3D illustre le processus de création d'une copie authentifiable de transmission à partir d'une copie authentifiable de détention sous forme de document électronique. Pour ce schéma, la copie authentifiable de transmission est produite à destination de l'entité détentrice qui se charge de sa transmission à l'entité requérante. Ce schéma est une adaptation du schéma 3A à cette configuration particulière.
- Le schéma 3E illustre le processus de création d'une copie authentifiable de transmission à partir d'une copie authentifiable de détention sous forme de document électronique. Pour ce schéma, la copie authentifiable de transmission est directement produite à destination de l'entité requérante. Ce schéma est une adaptation du schéma 3A à cette configuration particulière
- Le schéma 3F illustre le processus de création d'une copie authentifiable de transmission à partir d'un accès à l'original. Pour ce schéma, la copie authentifiable de transmission est produite à destination de l'entité détentrice qui se charge de sa transmission à l'entité requérante. Ce schéma est une adaptation du schéma 3A à cette configuration particulière.
- Le schéma 3G illustre le processus de création d'une copie authentifiable de transmission à partir d'un accès à l'original. Pour ce schéma, la copie authentifiable de transmission est directement produite à destination l'entité requérante. Ce schéma est une adaptation du schéma 3A à cette configuration particulière
- Le schéma 4 reprend la partie création d'un document authentifié, se schéma est extrait du schéma global 1,
- Le schéma 5 reprend la partie mise à jour d'un document authentifié,
- Le schéma 6 est un exemple de disposition spatiale de sous-séquences de règles dans un paragraphe d'une copie authentifiable.
- Le schéma 7 illustre la compatibilité d'un encodage de règles en sous-séquences dans le cadre d'une saisie photographique.
- Le schéma 8 illustre la compatibilité d'un encodage de règles en sous-séquences dans le cadre d'une saisie par balayage vidéo.

Le schéma 1 est un schéma global et ne sera donc explicité qu'à travers les vues partielles de celui-ci que représentent les schémas 2,3 et 4.

Dans l'ensemble de ces schémas, les informations de gestion des documents originaux et des copies délivrées sont toutes les données que l'entité de gestion d'authentification mémorise et stocke concernant tout document original, toute copie authentifiable et toute copie authentifiée que cette entité gère et/ou délivre. Ces informations peuvent inclure de façon non limitative :
- L'inventaire des documents originaux accessibles par cette entité ainsi que celui des copies authentifiables et des copies authentifiées associées à ces documents originaux, éventuellement indépendamment de l'entité qui les a délivré,
- Toute information relative aux documents originaux accessibles définie par l'entité émettrice ainsi que toute information complémentaire délivrée par une autre entité,
- Toute information relative aux copies authentifiables en provenance soit de l'entité émettrice soit de l'entité détentrice soit de toute autre entité,
- Toute information relative aux copies authentifiées y compris celles définies par d'autres entités,
- Toute information relative à l'identification des entités émettrices, des entités détentrices et des entités requérantes, ces informations permettent en particulier de connaître les possesseurs des différentes copies authentifiables et copies authentifiées produites et incluent des informations de localisation physique et/ou électronique permettant l'envoi à ces entités de documents matériels et/ou de documents électroniques.

Le schéma 2 illustre le processus de création d'un document original. Ce processus est conforme à ce qui était déjà décrit dans mes brevets antérieurs avec une notion nouvelle : les documents originaux ne sont jamais soumis directement à un processus de reproduction, seules des copies authentifiables permettent l'obtention de copies authentifiées. Ni les copies authentifiables ni les copies authentifiées ne sont des documents originaux. Il est également défini une clé d'accès à l'original qui permet d'obtenir des copies authentifiées qui intègre les copies authentifiables mais également d'autres objets permettant à la solution d'être compatible avec tous les modes de diffusion de l'information que ce soit matériel ou virtuel.

Lorsqu'une entité émettrice crée un document unitaire original, celle-ci stocke dans un coffre-fort soit un document électronique considéré comme le document original produit, soit un ensemble d'information suffisant pour qu'une chaine de production informatique soit capable de produire à partir de celles-ci une image du document original sous forme de document matériel et/ou de document électronique dans un format de présentation conforme aux définitions et ou directives de l'entité émettrice. L'entité émettrice a la charge de définir soit pour chaque document original produit soit pour un ensemble de documents originaux le coffre-fort où sont stockés le ou les documents originaux désignés. L'entité émettrice a la charge de définir, soit pour chaque document original produit, soit pour un ensemble de documents originaux l'entité de gestion d'authentification qui sera chargé de gérer les délivrances d'authentification liées à chaque document original produit ou à un ensemble de documents originaux. La définition par l'entité émettrice soit du coffre-fort soit de l'entité de gestion d'authentification peut être suffisante pour désigner les deux éléments. Dans un mode de réalisation particulier de l'invention, l'entité émettrice envoie son document original à une entité de gestion d'authentification qui prend en charge la définition du coffre-fort et/ou le stockage du document original dans le coffre-fort.

Dans un mode de réalisation particulier de l'invention, dans le cas ou le document original est constitué intégralement ou partiellement d'un ensemble d'informations, ces données pourront intégrer des données contextuelles complémentaires soient définies par l'entité émettrice mais de façon désynchronisée avec la création du document original soit définies par toute entre entité que l'entité émettrice que ces donnés complémentaires soit définies de façon synchrone ou non avec la production du document original tel que défini précédemment. Tout ou partie de ces données complémentaires pourront être stockées dans un coffre-fort identique ou différent du coffre-fort utilisé dans le cadre normal de l'invention tel que décrit précédemment, ce coffre-fort étant géré ou non par l'entité de gestion d'authentification chargé de la gestion du document original produit. Dans ce mode particulier, il incombe à l entité de gestion d'authentification de garantir l'adéquation de ces données avec la garantie d'authenticité du document original résultant ainsi défini.

Parallèlement à la création du document original, l'entité émettrice définit un ensemble d'informations liées au document original ainsi que celles liées aux droits, contraintes et restrictions de diffusion du document original ce qui inclut de façon non exhaustive :
- Des informations contextuelles liées au document original lui-même, tel que sa date de création, son auteur (entité(s) et/ou individu(s)), le format original de création (PDF, XML, Word, fichier texte, enregistrements de base de données, etc), les limites de validité (date de début de validité, fin de validité), taille, nombre de pages,
- Le destinataire officiel du document original, par exemple l'entité ou l'individu facturé pour une facture identifié par des coordonnées (nom, adresse, etc) et/ou par des références (numéro client, numéro SS, etc),
- Le cadre contractuel auquel est attaché le document original. Par exemple les informations liées aux contrats de souscription de la prestation dans une facturation périodique. Ces informations peuvent être soient des documents originaux eux-mêmes soient des données de type informatique soit toute information permettant d'atteindre ces informations : un numéro de contrat permet, par exemple, par accès à une base de données externe, d'atteindre les informations de ce contrat.
- Le référencement d'autres documents originaux liés à ce document original accessible dans le même coffre-fort que le document original de référence ou dans un ou d'autres coffres-forts.
- Des contraintes de diffusion du document original et ou des documents originaux qui lui sont associés. Ces contraintes peuvent être définies de façon non limitative pour chacun des documents originaux ainsi défini, de façon collective ou individuelle, comme suit de façon combinée ou non:
   ∘ Contraintes temporelles de l'accès au document original (uniquement à des dates ou à des intervalles de dates définis par exemple ou accès modulé en fonction de la date de la demande),
   ∘ Contraintes géographiques de l'accès au document original, accès modulé en fonction de la localisation de la demande.
   ∘ Contraintes sur l'accès au document original en termes de destinataires. L'accès peut être réservé soit à un ou des individus identifiés soit à une ou des entités identifiés soit à un ou à des individus et entités identifiés par l'appartenance à une catégorie ou par combinaison de ces définitions. Les catégories ainsi définies peuvent correspondre à des types d'entités (administration de façon générique, administration particulière, banques, assurances ...) ou d'individus (huissiers, avocats, personnel médical de façon générique ou catégories définies de personnel médical, etc) indépendamment de leur identité propre.
   ∘ Contrainte en volume, le nombre de copies produites (copies authentifiables et ou copies authentifiées) peut être encadrées par des limites en nombre de façon globale ou en combinaison avec les autres caractéristiques (par exemple : limites en fonction de la qualité du destinataire ou des dates de délivrance).
   ∘ Contrainte en format de délivrance des copies. Le format de délivrance des copies authentifiables et copies authentifiées produites peut être limité. Les copies peuvent n'être produites que sous forme de document matériel ou que sous forme de document électronique, et dans ces deux cas uniquement sous certains formats (PDF par exemple) ou média (papier A4 par exemple). Ces contraintes peuvent également concernés le contenu lui-même : suppression ou redéfinition des couleurs de la copie, suppression de certains constituants du document (logo, signature, montant, paragraphes, etc), agrandissement ou réduction du document, modification ou imposition des caractéristiques recto-verso du document.
   ∘ Contrainte en traçabilité : toute opération de délivrance d'une copie peut faire l'objet d'un archivage (mémorisation des caractéristiques de délivrance). Une image de la copie délivrée peut également être stockée suivant des modalités particulières.
   ∘ Contrainte en notification : chaque délivrance peut faire l'objet d'une notification à l'entité émettrice et/ou à l'entité détentrice et/ou à toute entité autre suivant des modalités particulières.

Suivant un mode particulier de l'invention, les informations liées aux droits, contraintes et restrictions de diffusion du document original peuvent être définies de façon désynchronisée de la création du document original ou de façon générique pour un type de documents originaux. Cette définition peut être complétée ou modifiée postérieurement à une ou de définitions antérieures. Les définitions successives peuvent être effectuées par des entités différentes de l'entité émettrice, elles peuvent également être définies globalement ou partiellement par des entités distinctes.

L'ensemble de ces informations est réceptionné par l'entité de gestion d'authentification qui les stocke suivant des modalités qui lui sont propres afin d'assurer la gestion de délivrance d'authentifications associé au document original stocké en coffre-fort conformément à ces définitions.

Le schéma 3 illustre le processus de création d'une copie authentifiable de transmission. Cette copie authentifiable de transmission est requise par l'entité détentrice dans le but de mettre à disposition d'une entité requérante un document authentifié lié à un document original sur lequel l'entité détentrice possède une clé d'accès à l'original. Cette requête est effectuée pour répondre à une requête correspondante de l'entité requérante que celle-ci soit explicite ou implicite.

Une telle requête, implicite ou explicite, peut ainsi être nécessaire par l'entité requérante dans les cas suivants, non exhaustifs :
- Si l'entité requérante est une banque et l'entité détentrice est un particulier, dans le cadre de l'ouverture d'un compte bancaire ou de l'obtention de tout type de crédit, cette requête pourra concerner tout document servant de justificatif de domicile (Pièces d'identité, factures de fournisseur d'électricité, de gaz, de téléphonie ainsi que de toute fourniture à particulier associée à une adresse), fiches de salaire, contrat de travail, documents contractualisant l'objet du crédit (Promesse de vente, proposition commerciale), documents administratifs ou notariés liés au bien à acquérir,
- Si l'entité requérante est une banque et l'entité détentrice est une entreprise, dans le cadre de l'ouverture d'un compte bancaire ou de l'obtention de tout type de crédit, cette requête pourra concerner tout document qualifiant l'entreprise (documents administratifs, légaux ou comptables) ainsi que tout document qualifiant la transaction (commande, factures, contrats ...)
- Dans un cadre général, quelque soit l'entité requérante et l'entité détentrice la requête pourra concerner et de façon non limitative tout document administratif ou privé que ce document atteste d'un statut particulier de l'entité requérante, son attachement à un bien, à un individu ou à une collectivité d'individu, à une entité ou à des entités commerciales et/ou administratives, une relation contractuelle, transactionnelle ou d'affaire.

L'entité détentrice utilise alors la clé d'accès à l'original en sa possession attachée au document original sur lequel porte la demande, implicite ou explicite, de l'entité requérante pour formuler une demande de copie authentifiable de transmission via un système de délivrance d'authentification.

La simple détention de la clé d'accès à l'original peut suffire pour son détenteur pour l'autoriser à solliciter l'entité de gestion d'authentification associé à la copie authentifiable traitée via l'interface adapté système de délivrance d'authentification adapté. Cette possibilité peut toutefois est subordonnée à une identification complémentaire, ainsi il pourra être demandé toute information complémentaire qualifiant directement ou indirectement le requetteur, c'est-à-dire l'entité effectuant la requête. Les informations qualifiant directement le requetteur peuvent être de façon non exhaustive : son nom, son adresse, sa date de naissance, certaines préférences ... Les informations qualifiant le requetteur indirectement peuvent être de façon non exhaustive : un login/mot de passe, un code spécial, la réponse à une question secrète. Cet accès peut aussi être subordonné à l'utilisation d'une connexion spécialement identifiée soit de façon non exhaustive: accès depuis un site internet d'accès non libre, l'utilisation d'un identifiant réseau (numéro IP par exemple) particulier. L'accès peut être également subordonné à toute combinaison de ces modes.

L'unité détentrice lorsqu'elle requière une copie authentifiable de transmission. via un système de délivrance d'authentification définit les possibilités et limites d'utilisation de la copie authentifiable de transmission qu'il désire obtenir. Ces définitions concernent les potentialités d'obtention de copies authentifiées à partir de la copie authentifiable de transmission produite. Celles-ci peuvent être de définies comme suit de façon non exhaustive, cumulatives ou non:
- Obtention d'une copie authentifiée simple : soit la possibilité d'obtention d'une copie authentifiée du document original, cette copie étant limitée aux informations déjà inclues dans la copie authentifiable de transmission produite ou du document original associé. A la différence de tout document authentifiable émis sur action de l'entité détentrice en relation avec l'entité émettrice, la copie authentifiée est produite par une relation directe entre l'entité de gestion d'authentification du document original et l'entité requérante via la copie authentifiable de transmission sans intervention directe ni de l'entité émettrice ni de l'entité détentrice lors de la délivrance de la copie authentifiée.
- Obtention de toute copie authentifiée produite à partir d'une autre version originale du document original de référence associé à la copie authentifiable de transmission à produire ainsi que tout document authentifié produit à partir de toute autre variante originale et tout document original connexe associé à ce même document original de référence. La liste des documents authentifiés pouvant ainsi obtenir à partir de la copie authentifiable de transmission à produire peut être défini soit directement par l'entité détentrice par une sélection appropriée proposée par l'entité de gestion d'authentification à travers le système de délivrance d'authentification auquel est interfacé l'entité détentrice soit indirectement. Lorsque la liste est produite indirectement, elle est définie par l'entité détentrice par une sélection appropriée de critères proposés par l'entité de gestion d'authentification à travers le système de délivrance d'authentification auquel l'entité détentrice est interfacée. Cette liste définie directement ou indirectement peut inclure des documents originaux associés au document originaux indépendamment de leur chronologie, les documents originaux proposés en sus du document original de référence pouvant être d'une datation identique, plus ancienne ou plus récente que celle de ce dernier. De même cette liste peut inclure implicitement ou explicitement des documents originaux associés au document original de référence n'ayant pas encore été créé et/ou pas encore déposé dans un coffre-fort géré par l'entité de gestion d'authentification sollicitée par l'entité émettrice via un système de délivrance d'authentification. Ainsi si l'entité émettrice autorise à la création d'une copie authentifiable de transmission l'obtention de copies authentifiées d'un document original de référence qui peut être par exemple la dernière facture mensuelle concernant cette entité pour un service donné tel que la fourniture d'électricité ainsi qu'aux autres versions originales associées à ce document original de référence pendant une période de six mois après la date de création de ce document authentifiable, il autorise implicitement l'accès aux six prochaines factures mensuelles qui n'ont pas encore été créées et donc pas encore stockées dans un coffre-fort de ce service à cette entité.
- Obtention d'une copie authentifiée à postériori. Dans ce cas, l'entité de gestion d'authentification a accès aux informations de localisation de l'entité requérante qui a utilisé la copie authentifiable de transmission pour obtenir une ou des copies authentifiées suivant les modalités précédemment définies. L'entité de gestion d'authentification utilise ces informations lorsqu'elle est en mesure de produire une nouvelle copie authentifiée à partir d'un document original attaché au document original de référence, dans le cas ou cette copie authentifiée n'a pas ou pas pu être produite antérieurement et que celle-ci doit être délivrée à l'entité requérante. Dans ce cas, lorsque l'entité de gestion d'authentification détecte la disponibilité nouvelle de copies authentifiées et si l'entité requérante est toujours autorisée à réceptionner ce type de document, alors l'entité de gestion d'authentification enverra automatiquement à l'entité requérante :
   ∘ Soit une copie authentifiée des nouveaux documents originaux sous la forme adéquate papier et/ou électronique par toute voie adaptée (email, fax, téléimpression, téléchargement ...)
   ∘ Soit une information indiquant la disponibilité de ces nouveaux documents originaux, cette information étant transmise sous toute forme admissible (email, courrier traditionnel, SMS, mise à jour d'une base de données, ...). L'entité requérante pouvant alors accéder à ces nouveaux documents originaux par un accès spécifique dont la définition accompagne l'information transmise ou déjà connu par l'entité requérante, soit en effectuant une nouvelle reproduction de la «copie authentifiable de transmission initiale si celle-ci est toujours à la disposition de l'entité requérante, soit à partir d'une des copies authentifiées déjà obtenus si celles-ci sont également des copies authentifiables.
- Obtention d'une copie authentifiée avec attachement de transaction : dans ce cas, en sus de la copie authentifiée obtenue ou indépendamment de l'obtention de celle-ci, l'entité requérante a la possibilité d'envoyer des informations qualifiant une transaction en cours, passée ou à venir dont l''entité requérante est partie prenante, ces informations sont alors transmises à l'entité de gestion d'authentification via un système de délivrance d'authentification adapté pour être associées au document original associé à partir de la copie authentifiable détenue par l'entité requérante.
- Moduler toute obtention précédemment définie à une période limitée. Ainsi les demandes de copie authentifiées ne pourront être délivrées par l'entité de gestion d'authentification que dans une période définie par l'entité détentrice soit par définition d'une date de début et/ou d'une date de fin et/ou d'une durée ou toute définition équivalente permettant la définition de telles valeurs. Ces limites peuvent être définies pour tout type d'obtention de copie authentifiée à partir de la copie authentifiable de transmission ou spécifiquement pour un ou plusieurs types d'obtention, l'entité détentrice pouvant ainsi définir autant de périodes que nécessaires.
- Moduler toute obtention précédemment définie en fonction de l'entité requérante qui demande une copie authentifiée à partir de la copie authentifiable de transmission produite. Ainsi l'unité requérante pourra définir que la copie authentifiable de transmission produite ne permet d'obtenir tout ou partie des modes d'obtention de copie authentifiée à un plusieurs types d'organisme et/ou à un ou plusieurs organismes spécifiques. Les types d'organismes peuvent ainsi être :
   ∘ Un ou plusieurs types d'organismes, ces types peuvent être de façon non limitatives les administrations publiques, les banques, les Compagnies d'assurance, etc.
   ∘ Un ou plusieurs organismes spécifiquement déterminés, soit par exemple une combinaison d'un ou plusieurs organismes tels qu'indiqué ci-après:
      ▪ une banque particulière ou seulement un département de celle-ci voire une agence ou un service particulier ou un individu particulier ou toute combinaison de ces entités,
      ▪ L'administration fiscale, ou un département ou service de cette administration et/ou une délimitation locale de celle-ci. Ou toute combinaison de ces entités
- Moduler la production de toute ou de certaines copie authentifiées produites par rapport au document original dont elles sont les copies par :
   ∘ La suppression de certaines informations ou zones du document produit,
   ∘ La modification de caractéristiques telles que suppression de couleur, remplacement d'image ou de logo, modification de résolution ou de format,
   ∘ L'ajout d'information spécifique à la copie produite telle que la date et indications des possibilités et limites d'utilisation dans le cadre de l'obtention de copies authentifiées.
- Définir une traçabilité totale ou partielle de toute délivrance de copie authentifiée obtenue à partir de la copie authentifiable de transmission produite ou de toute autre copie authentifiable produite à partir de celle-ci ou d'un sous-ensemble particulier de ces copies authentifiées. Cette traçabilité peut être passive, c'est-à-dire consistant au stockage d'informations pouvant être consultées à postériori soit par l'entité détentrice, soit par l'entité émettrice soit par toute autre entité. Cette traçabilité peut être active, c'est-à-dire que toutes les informations indépendamment de leur stockage éventuels sont envoyées à l'entité détentrice et/ou à l'entité émettrice et/ou à toute autre entité de façon synchronises ou non à leur création. La traçabilité peut également combiner traçabilité active et traçabilité passive. La traçabilité peut être définie avec ou sans limitation dans le temps, avec une limitation ou non des types des copies authentifiées et/ou des copies authentifiables produites.
- Avoir la possibilité ou non de pouvoir interrompre la délivrance de tout ou partie des copies authentifiées et/ou de copies authentifiables pouvant être produites à partir de la copie authentifiable de transmission produite ainsi qu'à partir de tout ou partie.des copies authentifiables produites à partir de celle-ci. Dans ce cadre, cette interruption pourra donner lieu à l'envoi par l'entité de gestion d'authentification de l'information correspondante à toute «entité requérante disposant de cette copie authentifiable de transmission ou d'une copie authentifiée obtenue à partir de celle-ci dans le cas ou cette interruption décidée par l'entité détentrice a un impact sur les possibilités d'obtention de nouvelles copies authentifiées pour ces entités requérantes.

Les schémas 3B à 3G illustrent le processus de création d'une copie authentifiable de transmission à partir d'une clé d'accès à l'original suivant différents cas caractérisant la clé d'accès à l'original. Tous ces schémas sont conformes au schéma 3A.

Le schéma 3B illustre le processus de création d'une copie authentifiable de transmission à partir d'une copie authentifiable de détention sous forme de document matériel. Pour ce schéma, la copie authentifiable de transmission est produite à destination de l'entité détentrice qui se charge de sa transmission à l'entité requérante.

Dans ce cadre, la clé d'accès détenteur à l'original est une copie authentifiable de détention sous forme de document matériel, l'unité détentrice peut alors utiliser un système de reproduction adapté pour obtenir une copie authentifiable de transmission. L'entité détentrice soumet sa copie authentifiable de détention à une copie comme il procéderait avec un document qui ne serait pas une copie authentifiable. Lorsqu'une copie est requise auprès d'un système de reproduction adapté, celui-ci recherche le caractère sensible éventuel du document soumis à la reproduction en y cherchant les marques. Lorsque cela est le cas, le document soumis est considéré comme sensible, ce qui dans le cadre de notre invention signifie que le document est une copie authentifiable. Si le système de reproduction adapté a la capacité de traiter d'autres types de documents sensibles tel que par exemple des documents confidentiels, la nature de copie authentifiable du document soumis à la reproduction est déterminé uniquement après exploitation des règles sauf dans le cas d'utilisation d'un type de marques spécifique aux documents authentifiables.

Lorsque le caractère de copie authentifiable est identifié par le système de reproduction adapté suivant les modalités qui précédent, le système de reproduction adapté propose à l'unité détentrice à partir du document soumis d'obtenir une ou des copies authentifiables et une ou des copies authentifiées en sus ou à la place de l'éventuelle copie classique initialement requise. Si l'entité détentrice valide l'obtention de copie(s) authentifiée(s) et/ou de copie(s) authentifiable(s). Le système de reproduction adapté, s'il ne l'a pas encore effectué, recherche et extrait les règles de la copie authentifiable de détention utilisée afin de connaître les possibilités et restrictions d'obtention d'authentification à partir de ce document éventuellement modulé par son contexte d'utilisation. Le contexte d'utilisation peut inclure les éléments géographiques et temporels de la requête ainsi que les éléments d'identité du requetteur. Le système de reproduction adapté initie alors un dialogue informatique avec l'entité détentrice afin de définir le ou les copies à produire. Par rapport au schéma ici explicité, l'unité détentrice peut ainsi définir l'obtention d'une copie authentifiable de transmission. Toutefois, en dehors du cadre de ce schéma, celle-ci peut à partir de sa copie authentifiable de détention obtenir en sus ou à la place de cette copie authentifiable de transmission toute copie ou toute combinaison de copies dans les limites définies implicitement ou explicitement par les règles de la copie authentifiable de détention utilisée.

Suivant un mode de réalisation particulier de l'invention, le dialogue informatique proposé par le système de reproduction adapté en vue d'obtenir une ou des copies authentifiées et/ou une ou des copies authentifiables n'est initialisé qu'après recherche et extraction des règles de la copie authentifiable de détention et une première exploitation appropriée de celles-ci.

Suivant un mode de réalisation particulier de l'invention, l'utilisateur peut effectuer une demande de copie authentifiable ou de copie authentifiée indépendamment de l'identification par le système de reproduction adapté de son caractère sensible et/ou de son caractère de document authentifiable. Dans ce cas, le système de reproduction adapté entame la numérisation du document présenté en vue de sa reproduction et recherche la présence de marques permettant de confirmer ce caractère sensible et/ou ce caractère de document authentifiable. Si celui-ci n'est pas confirmé la requête de l'utilisateur est rejetée et le système de reproduction adapté fournit un diagnostic approprié à l'utilisateur. Si des marques sont détectées et qu'elles sont compatibles avec la requête, le système de reproduction recherche et extraie les règles du document présenté. Ces marques sont compatibles si elles identifient le document comme un document sensible et dans le cas d'une définition de plusieurs types de marques que la marque détectée peut être associée à des documents authentifiables. A l'issue de la détection de marques compatibles, le système de reproduction adapté peut directement effectuer la recherche des règles et/ou fournir un diagnostic adapté à l'utilisateur et/ou engager un nouveau dialogue de type informatique avec celui-ci pour compléter et/ou confirmer la requête de reproduction.

Suivant un mode de réalisation particulier, toute copie classique obtenue à partir d'une copie authentifiable à partir d'un système de reproduction adapté est produite en supprimant tout ou partie des marques et des règles de la copie authentifiable présentée afin entre autres que la copie produite ne puisse être utilisée comme une copie authentifiable.

Lorsque l'unité détentrice récupère la ou les copies authentifiables de transmission requises sous forme de document papier et/ ou de document électronique, elle s'occupe de la transmettre à l'unité requérante soit par envoi d'un courrier classique ou par remise directe dans le cas d'un document papier soit par voie électronique tel qu'un email dans le cas d'un document électronique.

Le schéma 3C illustre le processus de création d'une copie authentifiable de transmission à partir d'une copie authentifiable de détention sous forme de document matériel. Pour ce schéma, la copie authentifiable de transmission est directement produite à destination de l'entité requérante.

Dans ce cadre, le procédé décrit dans le schéma précédent reste valide, toutefois les copies authentifiables de transmission sont directement transmises à l'unité requérante soit directement par le système de reproduction adapté, soit par l'entité de gestion d'authentification (transmission non représentée sur le schéma pour des raisons de clarté) soit par toute autre entité pouvant collaborer avec cette dernière entité.

Le schéma 3D illustre le processus de création d'une copie authentifiable de transmission à partir d'une copie authentifiable de détention sous forme de document électronique. Pour ce schéma, la copie authentifiable de transmission est produite à destination de l'entité détentrice qui se charge de sa transmission à l'entité requérante. Ce schéma est une adaptation du schéma 3A à cette configuration particulière.

Dans ce cadre, la clé d'accès détenteur à l'original est une copie authentifiable de détention sous forme de document électronique, l'unité détentrice peut alors utiliser un logiciel de reproduction adapté pour obtenir une copie authentifiable de transmission, dans ce cas le logiciel de reproduction adapté enchaine les mêmes traitements que le système de reproduction adapté comme indiqué pour le schéma 3B en adaptant son mode détection des marques et des règles à la nature électronique du document qui les intègre.

Le schéma 3E illustre le processus de création d'une copie authentifiable de transmission à partir d'une copie authentifiable de détention sous forme de document électronique. Pour ce schéma, la copie authentifiable de transmission est directement produite à destination de l'entité requérante.

Dans ce cadre, la clé d'accès détenteur à l'original est une copie authentifiable de détention sous forme de document électronique, l'unité détentrice peut alors utiliser un logiciel de reproduction adapté pour obtenir une copie authentifiable de transmission, dans ce cas le logiciel de reproduction adapté enchaine les mêmes traitements que le système de reproduction adapté comme indiqué pour le schéma 3C en adaptant son mode détection des marques et des règles à la nature électronique du document qui les intègre.

Le schéma 3F illustre le processus de création d'une copie authentifiable de transmission à partir d'un accès à l'original. Pour ce schéma, la copie authentifiable de transmission est produite à destination de l'entité détentrice qui se charge de sa transmission à l'entité requérante.

Dans ce cadre, la clé d'accès détenteur à l'original est un accès à l'original, l'entité détentrice utilise alors un système d'accès distant adapté. Ce dernier propose alors à l'unité détentrice les mêmes options que le système de reproduction adapté ou le logiciel de reproduction adapté lorsqu'ils ont déterminé le caractère authentifiable du document soumis à la reproduction tel que défini dans ce qui a été exposé pour les schémas 3B et 3D.

Comme dans les cas précédents, la simple détention de l'accès à l'original peut suffire pour son détenteur pour l'autoriser à solliciter le système d'accès distant adapté. Cette possibilité peut toutefois est subordonnée à une identification complémentaire, ainsi il pourra être demandé toute information complémentaire qualifiant directement ou indirectement le requetteur. En plus des modes d'identification précédemment définis, l'unité détentrice pourra s'identifier via l'utilisation d'informations contenues dans l'accès à original en sa possession. Ce dernier mode pourra lui-même être combiné aux autres modes d'identification préalablement définis.

De plus, dans ce cas l'accès à l'original pouvant être associé un document original particulier ou à un ensemble de documents originaux, le dialogue informatique proposé à l'unité détentrice pourra être adapté à cette pluralité de documents originaux. Dans les procédés associés aux schémas précédents 3B à 3E, le système de reproduction adapté ou le logiciel de reproduction adapté pourra également proposer une ou des copies authentifiées et/ou une ou des copies authentifiables de documents originaux autres que celui associé à la copie authentifiable présentée mais en respectant les limitations et restrictions implicites ou explicites attachées à la copie authentifiable présentée. Dans le présent cadre, en l'absence de présentation formelle de copie authentifiable pour établir la requête, celle-ci sera modulée en fonction des caractéristiques de l'accès à l'original utilisé qui pourra ne dépendre que des caractéristiques de l'entité détentrice.

Le schéma 3G illustre le processus de création d'une copie authentifiable de transmission à partir d'un accès à l'original. Pour ce schéma, la copie authentifiable de transmission est directement produite à destination de l'entité requérante.

Dans ce cadre, ce qui a été défini pour le schéma 3F s'applique, les copies authentifiables de transmission sont directement transmises à l'entité requérante par le système d'accès distant adapté ou par l'entité de gestion d'authentification ou toute autre entité collaborant avec ces entités.

Le schéma 4 illustre le processus de création d'une copie authentifiée. Dans ce cas, l'entité requérante procède à une requête auprès de l'entité de gestion d'authentification via un système de délivrance d'authentification adapté en utilisant la copie authentifiable en sa possession ou qui lui a été confiée ponctuellement par l'entité détentrice. Il est possible également de concevoir des circuits de diffusion de la copie authentifiable entre l'entité détentrice et l'entité requérante plus complexe ou faisant intervenir d'autres acteurs, mais cela ne modifie pas le principe du procédé.

Dans ce schéma, l'entité détentrice n'est pas sollicitée en dehors de la fourniture initiale de la copie authentifiable de transmission à l'entité requérante. Toutefois, elle peut intervenir après la diffusion de la copie authentifiable de transmission en utilisant sa clé d'accès à l'original pour modifier ou supprimer les possibilités d'obtention de copies authentifiées et/ou de copies authentifiables à partir de cette copie authentifiable de transmission, dans les limites de ce que lui est permis et de ce qui a été défini par les différentes entités impliquées dans ce procédé vis-à-vis de l'original de référence et les différentes copies authentifiables produites à partir de celui-ci. Un des intérêts majeurs de l'invention est que l'entité requérante puisse obtenir directement, à partir de la copie authentifiable de transmission qui lui aura été fournie définitivement ou ponctuellement par l'unité détentrice, une copie authentifiée dans une liaison directe avec l'entité de gestion d'authentification suivant des modalités imposées à l'avance par l'entité détentrice ou à postériori.

Ce mode de délivrance original d'une copie authentifiée permets de garantir à l'entité requérante de posséder une copie avec une pleine garantie d'authenticité y compris postérieurement à sa réception tout en ne dépassant pas les limites de confidentialité définies par l'entité détentrice.

Il est possible d'enrichir ce schéma en ajoutant l'envoi d'une notification à l'entité détentrice à chaque fois, ou seulement dans certains cas à définir, qu'une copie authentifiable de transmission produite sous contrôle de l'entité détentrice ou qu'une copie authentifiable produite à partir de celle-ci permet la délivrance d'une copie authentifiée et/ou d'une copie authentifiable y compris quand cette délivrance est effectuée postérieurement à l'utilisation directe de la copie authentifiable de transmission comme cela serra défini dans la description liée au schéma 5.

Pour obtenir une copie authentifiée à partir de la copie authentifiable de transmission qui lui a été confiée, l'entité requérante soumet cette copie authentifiable de transmission à une entité de délivrance d'authentification en requérant une copie ou si le système de reproduction adapté le permet en requérant directement une copie authentifiée.

Les modalités de traitement de l'entité de délivrance d'authentification en fonction du type de document traité document papier ou document électronique et suivant les différents types de système pouvant correspondre à la définition d'une entité de délivrance d'authentification dans le cas de traitement d'une requête de reproduction basée sur une copie authentifiable de transmission sont identiques à ceux définis pour le même type de reproduction à partir d'une copie authentifiable de détention. Les différences résultent simplement des limitations et restrictions de reproduction qui diffèrent dans les deux cas.

En effectuant sa requête de reproduction auprès d'une entité de délivrance d'authentification à partir de sa copie authentifiable de transmission, l'entité requérante peut effectuer tout ou partie des demandes suivantes, à l'initialisation du processus de reproduction ou pendant celui-ci ou par étapes successives tout au long de celui-ci en fonction des possibilités de définition offertes par le système de délivrance d'authentification en rapport avec l'exploitation implicite ou explicite des règles de la copie authentifiable de transmission soumise au processus de reproduction.

Dans ce cadre, l'entité de délivrance d'authentification peut proposer un dialogue informatique à l'entité requérante pour construire sa requête en une ou plusieurs étapes. Ce dialogue peut requérir une identification de la part de l'entité requérante afin entre autres de fournir une moyen de délivrance de ces copies et/ou d'information sur leur disponibilité immédiate ou à postériori pouvant inclure de façon non limitative une définition simple ou multiple d'adresse physique et/ou électronique et/ou téléphonique, une définition de connexion (login).

La requête ainsi exprimée peut comprendre tout ou une partie des éléments suivants :
- Obtention d'une copie authentifiée simple : soit la possibilité d'obtention d'une copie authentifiée du document original de référence directement associé à la copie authentifiable de transmission,
- Obtention de toute copie authentifiée produite à partir d'une autre version originale du document original de référence associé à la copie authentifiable de transmission,
- Obtention de toute copie authentifiée produite à partir de toute autre variante originale et tout document original connexe associé à ce même document original de référence.
- Obtention à postériori du processus de reproduction en cours de toute copie authentifiée pouvant être obtenues à partir de la copie authentifiable de transmission utilisée, la liste de ces copies peut être définie par l'entité requérante de façon implicite ou de façon explicite en s'adaptant au dialogue informatique correspondant proposé par l'entité de délivrance d'authentification.
- Obtention d'une copie authentifiée avec attachement de transaction : dans ce cas, en sus de la copie authentifiée obtenue ou indépendamment de l'obtention de celle-ci, l'entité requérante a la possibilité d'envoyer des informations qualifiant une transaction en cours, passée ou à venir dont l'entité requérante est partie prenante, ces informations sont alors transmises à l'entité de gestion d'authentification via le système de délivrance d'authentification adapté pour être associées au document original associé à partir de la copie authentifiable de transmission détenue par l'entité requérante ou à tout autre document original pouvant lui être associé par l'entité de gestion d'authentification. Cet attachement de transaction peut être mis en défaut dans les cas suivants :
   ∘ Lorsque l'entité de gestion d'authentification détecte dans les informations de gestion liées au document original associé une information non compatible avec la transaction à enregistrer, cela peut être le cas en particulier lorsqu'une transaction concurrente a déjà été enregistrée sur le même document original par une autre entité,
   ∘ Lorsque l'entité requérante lors de son opération de reproduction au vue des informations qui lui auront été transmises par l'entité de gestion d'authentification lors du dialogue informatique établi aves le système de délivrance d'authentification sollicité, juge que ces informations ne sont pas compatibles avec la transaction en cours d'enregistrement ou que celle-ci doit être suspendue dans l'attente d'informations complémentaires.

Si les règles de la copie authentifiable de transmission détenue par l'entité requérante l'autorise implicitement ou explicitement, cette copie peut alors être utilisée comme un copie authentifiable de détention et l'entité requérante peut alors en devenant virtuellement ainsi une entité détentrice requérir l'obtention de copies authentifiables de transmission pour d'autre entités qui sont potentiellement autant de nouvelles entités requérantes.

Le schéma 5 illustre les possibilités de mise à jour des informations liées aux documents originaux déjà émis. Toutes les actions ainsi décrites peuvent également être exécutées par toute autre entité ayant l'autorisation implicite ou explicite d'intervenir sur la gestion des documents originaux émis par l'entité émettrice et/ou sur tout autre document original lié à ces documents.

L'entité émettrice peut envoyer à l'entité de gestion d'authentification afin qu'il soit stocké en coffre-fort tout nouveau document original en lien avec le document original de référence, soit principalement :
- Tout document original qui est une autre version originale du document original de référence,
- Tout document original qui est une autre variante originale du document original de référence,
- Tout document original qui est un document original connexe du document original de référence,

Suivant un mode de réalisation particulier de l'invention, certains de ces nouveaux documents originaux peuvent être stockés en dehors d'un coffre-fort et sont alors considérés comme des informations liées au document original (de référence).

Parallèlement à cet envoi ou de façon indépendante, l'unité émettrice envoie à l'entité de gestion d'authentification toute information utile et/ou toute information concernant :
- des documents originaux déjà envoyés à l'entité de gestion d'authentification,
- des documents originaux stockés dans un coffre-fort non géré par l'entité de gestion d'authentification,
- des documents originaux non encore existants ou ayant été détruits,

Ces informations envoyées à l'entité de gestion d'authentification peuvent être de façon non limitative par à rapport à l'ensemble des documents originaux précédemment définis incluant le document original de référence et tout autre document original pouvant leur être associé :
- Toute information contextuelle liée à ces documents originaux ainsi que toute modification ou suppression d'une telle information déjà transmise,
- Toute définition de destinataire officiel de ces documents originaux ainsi que toute modification ou suppression d'une telle information déjà transmise,
- Toute définition de cadre contractuel de ces documents originaux ainsi que toute modification ou suppression d'une telle information déjà transmise,
- Toute définition de référencement d'autres documents originaux liés à ces documents originaux ainsi que toute modification ou suppression d'une telle information déjà transmise,
- Toute contrainte de diffusion de ces documents originaux ainsi que toute modification ou suppression d'une telle information déjà transmise,

Le schéma 6 illustre la méthode d'encodage des règles sur une copie authentifiable afin entre autres d'optimiser son traitement par une interface de mobilité adaptée.

Ainsi, une règle est constituée d'un ensemble d'informations de type informatique pouvant être encodé par un codage binaire soit une succession de 0 et de 1. Il existe évidemment de nombreux types d'encodage pouvant satisfaire à l'encodage de règles comme par exemple un encodage ternaire (succession de 0,1 et 2) ainsi que tout encodage ou combinaison d'encodages pouvant être traité par une intelligence informatique. Dans le cas, ou les règles se contenteraient de référencer un document, ou tout du moins une copie authentifiable particulière de document, on peut estimer pour une population utilisatrice sur terre de 2 milliards de personnes, le potentiel de diffusion d'environ 10 copies authentifiables par an. Ce qui nous donne pour une période de 20 ans, un potentiel de 4 * 10⁸. Ce codage nécessite une succession de 5 octets, ce qui avec des octets complémentaires d'encryptage et de redondance (pour vérifier la validité du décryptage) nous donne un total de 10 à 15 octets. La règle ainsi obtenue peut être décomposée en un certain nombre de sous-séquences, deux, trois ou plus. La compilation d'au moins une occurrence de chaque sous-séquence permettant de reconstituer l'intégralité de la règle sans présager des contrôles de cohérence de lecture pouvant être effectués en complément. Une sous-séquence peut en effet être validée uniquement si un minimum d'un certain nombre d'occurrences est décodé avec succès.

Dans le schéma 6, nous avons supposé qu'une règle pouvait être décomposée en trois sous-séquences et que la capacité d'encodage sur une ligne de texte permet d'encoder au moins trois sous-séquences par ligne. Si les sous-séquences sont ainsi dénommées SS1, SS2 et SS3. Il est possible d'encoder celles-ci dans l'ordre suivant :
Lignes 1 et 1 modulo 3 (soient les lignes 4, 7, 10 etc.), les sous-séquences sont codées dans l'ordre SS1, SS2 et SS3 en laissant aux extrémités de la ligne et entre ces codages un espace vierge non codé fonction de l'espace disponible.
Lignes 2 et 2 modulo 3 (soient les lignes 5, 8, 11, etc), les sous-séquences sont codées dans l'ordre SS2, SS3 et SS1 en laissant aux extrémités de la ligne et entre ces codages un espace vierge non codé fonction de l'espace disponible.
Lignes 3 et 0 modulo 3 (soient les lignes 6, 9, 12, etc), les sous-séquences sont codées dans l'ordre SS3, SS1 et SS2 en laissant aux extrémités de la ligne et entre ces codages un espace vierge non codé fonction de l'espace disponible.

On obtient ainsi un jeu de sous-séquences SS1, SS2 et SS3 suffisant pour reconstituer une règle complète dans tout espace élémentaire de texte (extraction partielle horizontale, verticale ou en biais). Cette disposition est évidemment donnée à titre d'exemple, toute autre décomposition en sous-séquences de règles et disposition dans l'espace permettant une reconstitution aisée dans de nombreux cas d'extraction partielle est également satisfaisante.

La distribution de sous-séquences de règles dans le document ne perturbe pas le traitement en vue d'obtention de copies authentifiables et/ ou de copies authentifiées via un système de reproduction adapté ou un logiciel de reproduction adapté qui peuvent aisément adapté leur algorithme de détection à la recherche d'un ensemble d'occurrences de sous-séquences de règles et de leur compilation en lieu et place de la recherche directe d'une certain nombre d'occurrences de règles complètes. Par contre, cet arrangement original est particulièrement adapté au traitement de copies authentifiables par une interface de mobilité adaptée comme l'indiquent le descriptif des schémas suivants.

Le schéma 6 illustre à partir d'une disposition de sous-séquences de règles conforme à la description du schéma 5 la compatibilité de cet encodage avec une prise photo via une interface de mobilité adaptée.

Ainsi si la photo du document est suffisamment grande, dans de nombreux cas elle intégrera au moins une occurrence de chaque sous-séquence de règles, soit dans notre illustration les sous-séquences SS1, SS2 et SS3. La prise photo peut alors être pilotée par un logiciel spécifique qui va optimiser les paramètres de prise de vue voire effectuer les corrections d'image nécessaire afin de permettre un décodage de chaque sous-séquence incluse dans la photo prise en y incluant d'éventuels contrôles de validité du décodage effectué si l'encodage le permet. Ce logiciel peut optimiser la prise photo en introduisant une redondance d'information en prenant de fait plusieurs photos dans un certain laps de temps, de préférence court. La mutualisation des images permet à l'homme de l'art d'introduire des algorithmes permettant de déduire avec une meilleure précision la réalité graphique du document traité et par conséquent d'obtenir un décodage des sous-séquences de règles plus précis.

A partir de ce décodage des sous-séquences de règles et de la reconstitution correspondante de la règle complète, l'interface de mobilité adapté peut ainsi proposer l'obtention de copies authentifiables et/ou de copies authentifiées comme le permet un logiciel de reproduction adapté ou un système de reproduction adapté.

Le schéma 7 illustre à partir d'une disposition de sous-séquences de règles conforme à la description du schéma 5 la compatibilité de cet encodage avec un balayage vidéo via une interface de mobilité adapté.

Ainsi si un balayage suffisamment large est effectué sur une portion du document suffisamment longue, dans de nombreux cas il intégrera au moins une occurrence de chaque sous-séquence de règles, soit dans notre illustration les sous-séquences SS1, SS2 et SS3. Ce balayage créé ainsi un certain nombre d'images élémentaires, soit en général plus de vingt images à la seconde pour une vidéo de bonne fluidité. Ces images dans l'état actuel de la technologie sont en général de moins bonne qualité qu'une image photo, mais les caractéristiques techniques évoluent très rapidement et dans un avenir proche, il est vraisemblable que chaque image élémentaire d'une prise vidéo soit de qualité au moins égale aux prises photos actuelles. Cette prise vidéo peut alors être pilotée par un logiciel spécifique qui va optimiser les paramètres de prise de vue voire effectuer les corrections d'image nécessaire afin de permettre un décodage de chaque sous-séquence incluse dans chacune des images élémentaires de la prise vidéo en y incluant d'éventuels contrôles de validité du décodage effectué si l'encodage le permet. Ce logiciel peut également mettre à profit la multiplicité des images prises pour construire une ou des images résultantes de meilleure qualité en introduisant un traitement de redondance d'information. La mutualisation des images permet à l'homme de l'art d'introduire des algorithmes permettant de déduire avec une meilleure précision la réalité graphique du document ayant fait l'objet de la prise vue et par conséquent d'obtenir un décodage des sous-séquences de règles plus précis.

A partir de ce décodage des sous-séquences de règles et de la reconstitution correspondante de la règle complète, l'interface de mobilité adapté peut ainsi proposer l'obtention de copies authentifiables et/ou de copies authentifiées comme le permet un logiciel de reproduction adapté ou un système de reproduction adapté.

En conclusion, le procédé selon l'invention permet d'autoriser le possesseur réel ou virtuel d'une copie authentifiable à transmettre toute ou partie de l'information présente ou future attachée à ce document suivant des contraintes qu'il pourra définir et contrôler précisément. L'invention permet de s'attacher à ce que les contraintes définies soient respectées dans toute utilisation par un tiers des documents et/ou informations transmises.

Par rapport à une solution selon l'état de la technique, essentiellement axée sur la sécurisation de la transmission et le scellement, l'invention permet une transmission souple, axée sur l'authentification finale.

L'original n'est plus soumis directement à un processus de reproduction mais il est défini uniquement des copies authentifiables qui vont permettre la circulation d'informations authentifiées entre trois acteurs.

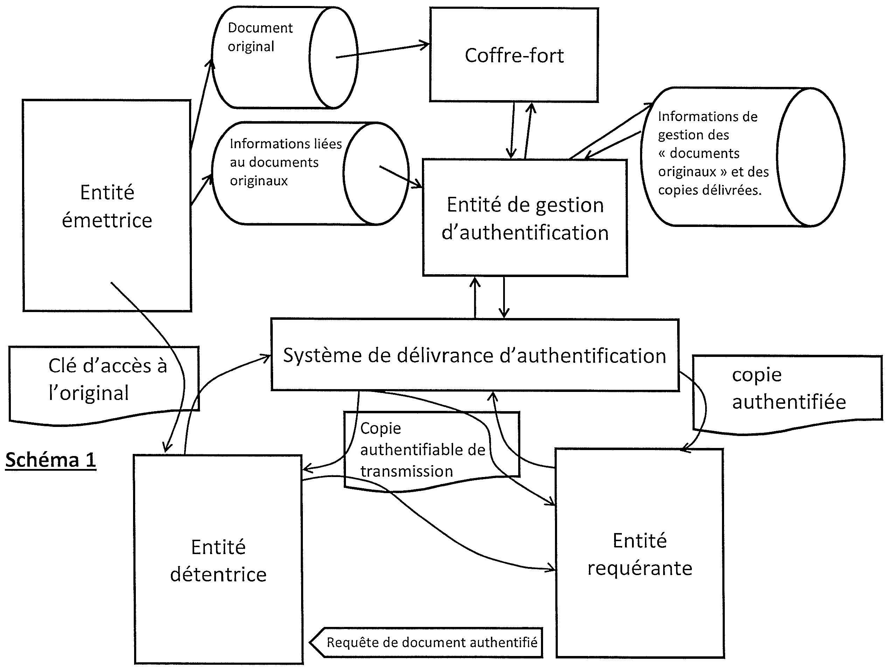

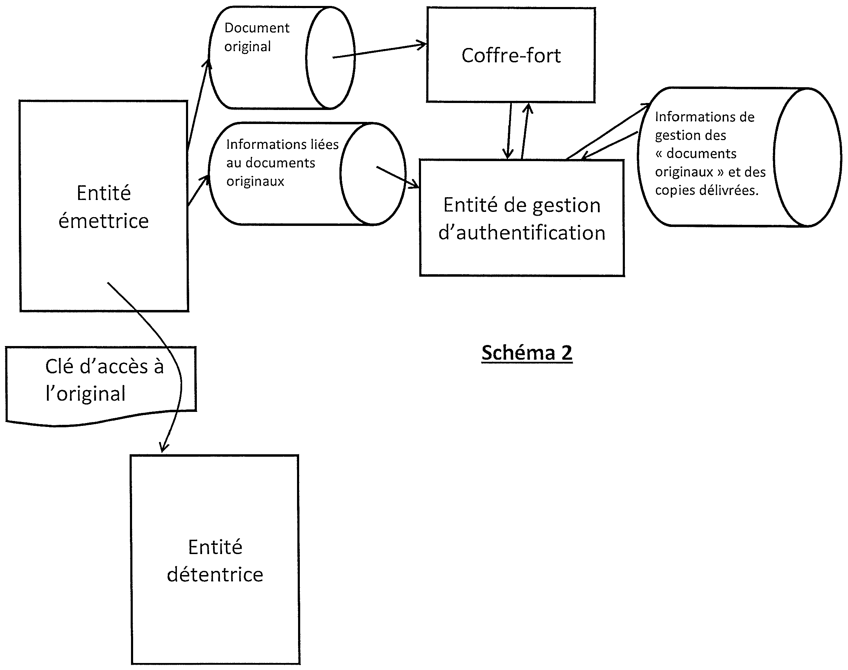

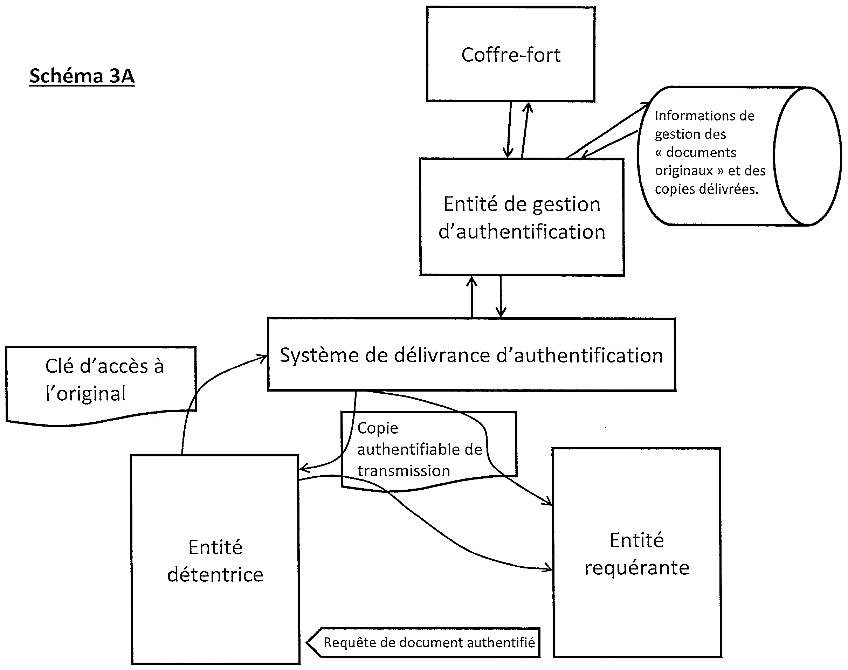

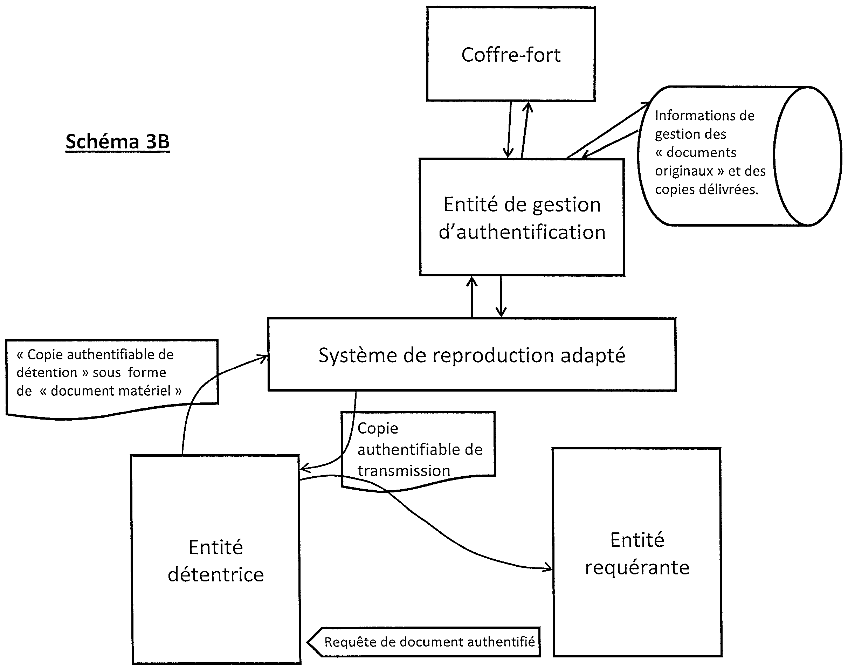

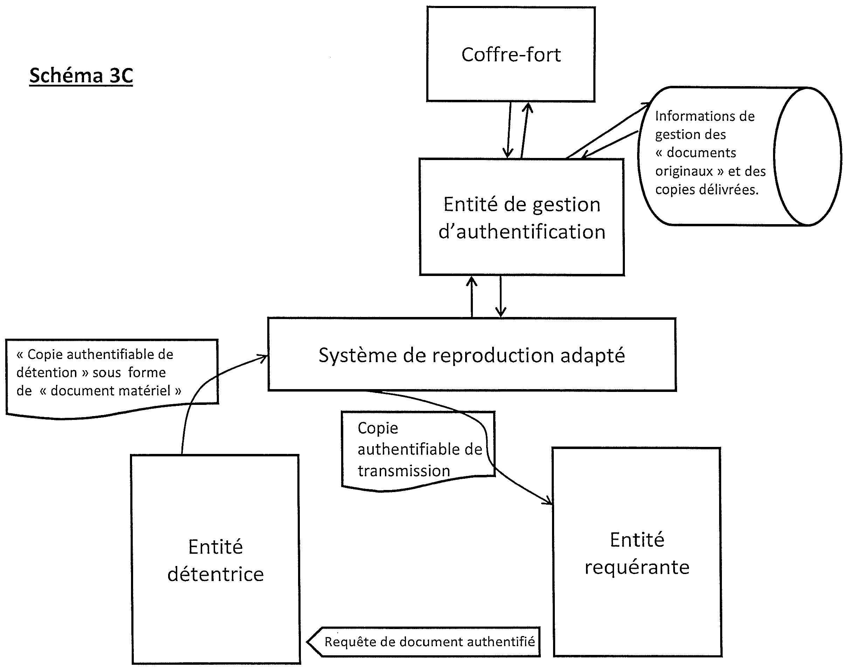

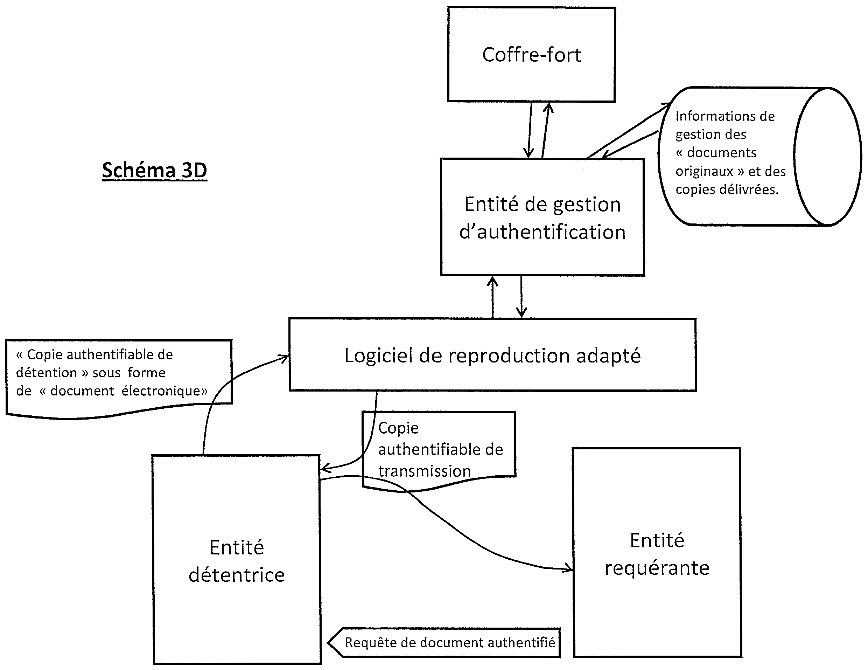

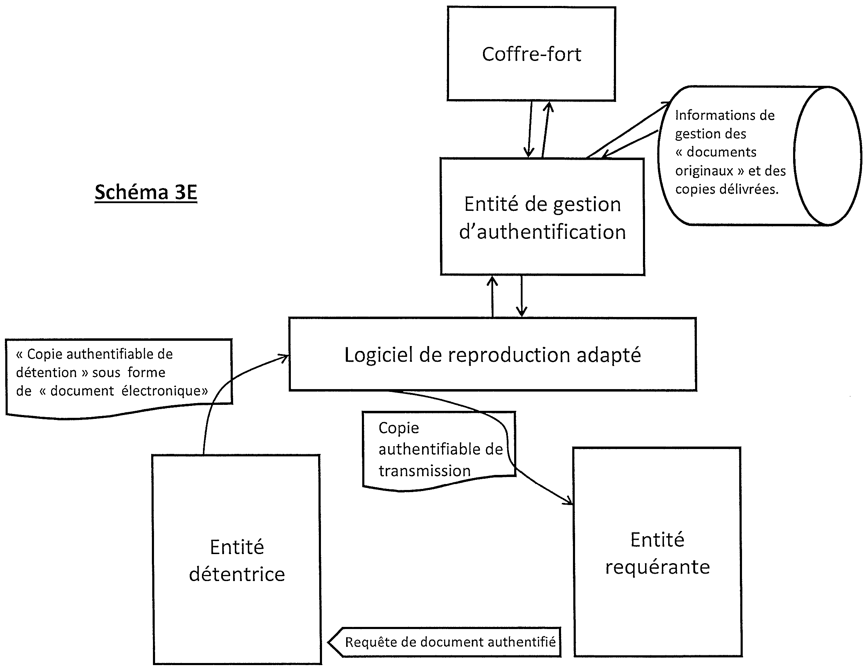

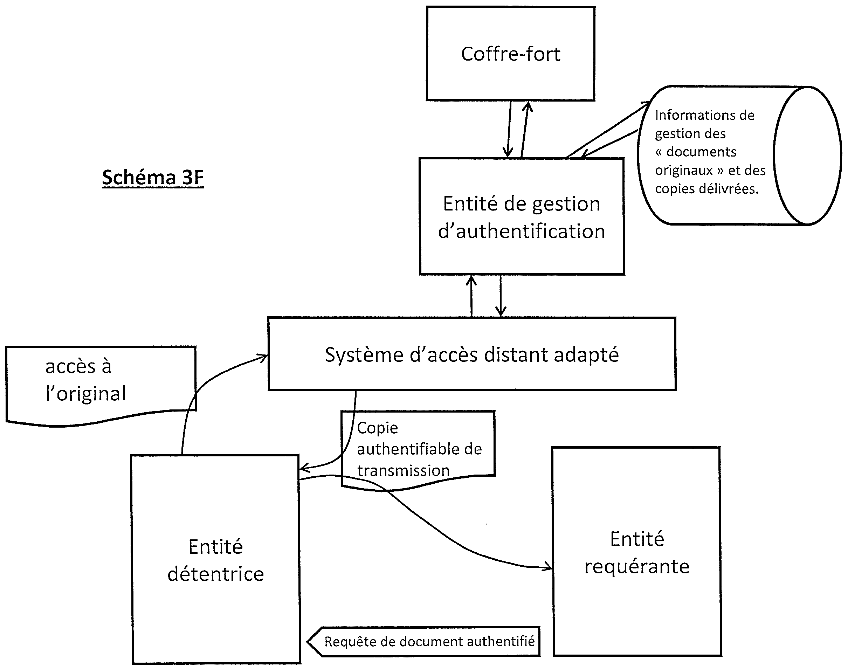

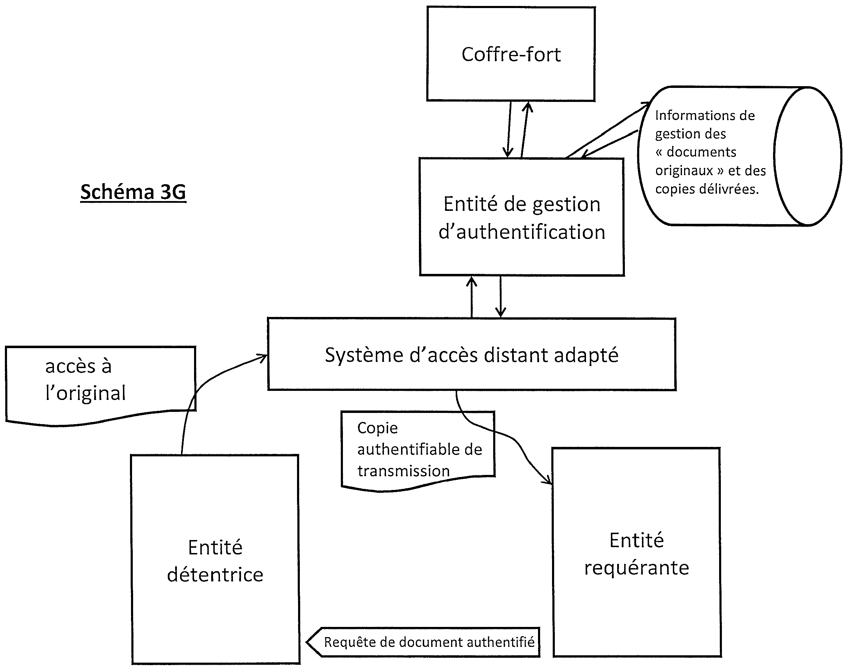

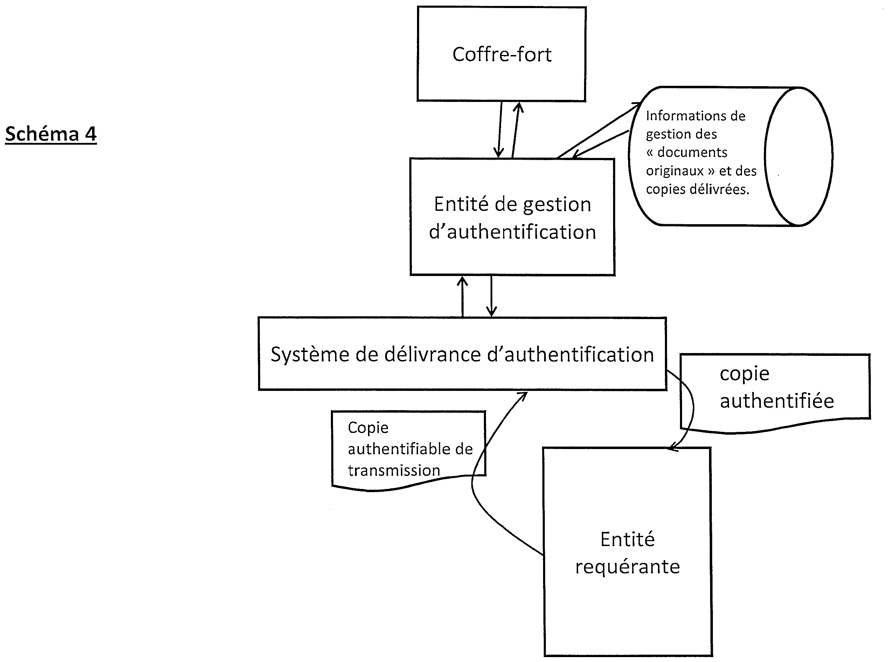

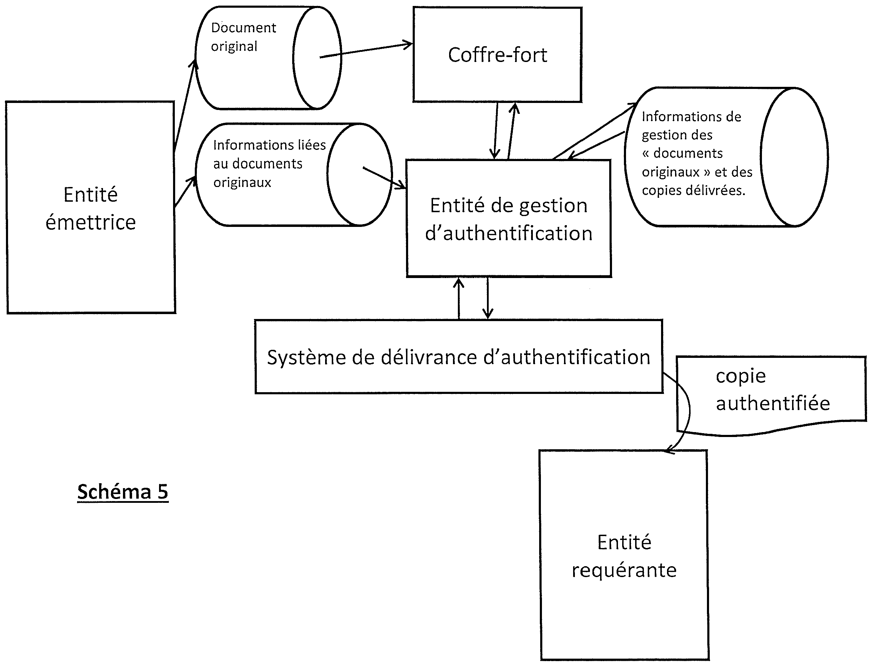

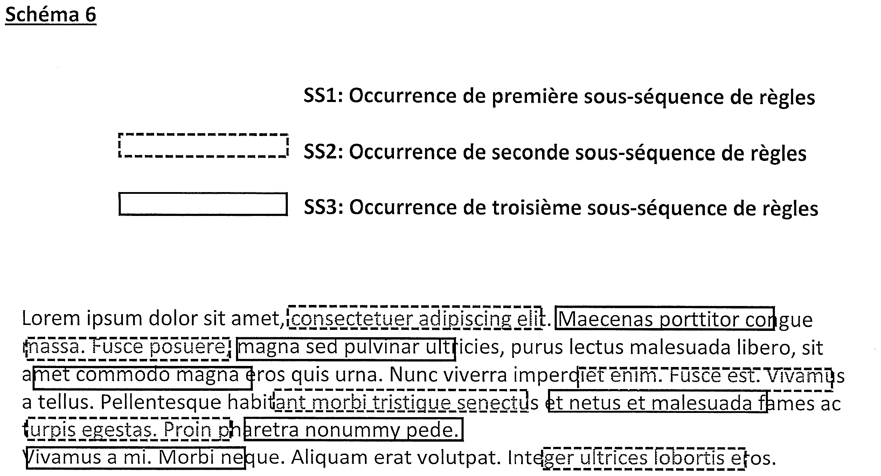

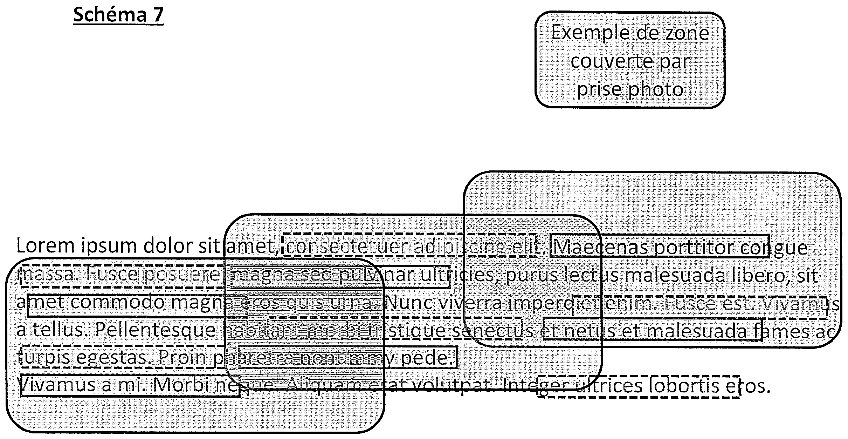

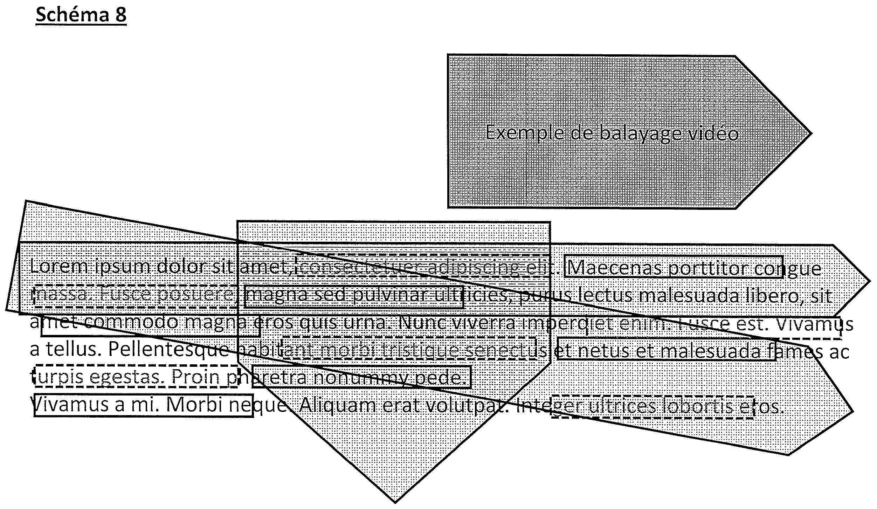

## Revendications

1. Procédé d'authentification d'un document pour lequel des copies authentifiées peuvent être requises par des entités requérantes, comprenant les étapes suivantes :
- création d'un original dudit document par l'entité émettrice, sous la forme d'un document électronique,
- envoi dudit original à une entité de gestion d'authentification afin que l'original soit stocké dans un site de stockage sécurisé,
laquelle entité de gestion d'authentification gère directement ou indirectement la délivrance de copies d'un type dit copie authentifiée et/ou d'un type dit copie authentifiable
- lors de l'émission, par une entité requérante à une entité détentrice, d'une requête de copie authentifiée dudit document, une telle copie authentifiée étant une copie dont l'authenticité est garantie par l'entité de gestion d'authentification,
∘ laquelle entité détentrice possède une copie authentifiable dudit document, toute copie authentifiable permettant à son détenteur de définir une nouvelle copie authentifiable et étant dénommée copie authentifiable de détention, ou une clé d'accès à l'original
∘ laquelle copie authentifiable est une copie produite à partir dudit original et qui :
▪ d'une part comporte des règles, sous forme d'élément graphique ou d'attribut informatique, qui permettent directement ou indirectement de définir les capacités d'obtention de copies authentifiées et/ou de copies authentifiables à partir de ladite copie authentifiable, lesdites règles étant détectables et exploitables par un système de reproduction adapté et étant adaptées au type de document : matériel ou électronique, et
▪ d'autre part permet à son détenteur d'obtenir via un système de reproduction adapté une ou des copies authentifiées et/ou une ou des copies authentifiables,
- l'entité détentrice effectue une requête de reproduction via un système de reproduction adapté, à partir de sa copie authentifiable de détention ou sa clé d'accès à l'original qui offre les mêmes possibilités d'obtention de copie authentifiée et/ou de copies authentifiables, afin d'obtenir une copie authentifiable de transmission
- contrôle du système de reproduction adapté, directement ou indirectement, par l'entité de gestion d'authentification afin de détecter les règles de la copie authentifiable de transmission, et de les exploiter pour fournir à l'entité requérante une copie authentifiable de transmission,
les possibilités d'obtention de copies authentifiables et/ou de copies authentifiées à partir de cette copie authentifiable de transmission étant définies par l'entité détentrice
- fourniture à l'entité requérante d'une copie authentifiée, délivrée sous le contrôle direct ou indirect de l'entité de gestion d'authentification, lorsque l'entité requérante utilise ladite copie authentifiable de transmission pour effectuer une requête de reproduction via un système de reproduction adapté.

2. Procédé d'authentification d'un document selon la revendication 1, **caractérisé en ce que** la requête pour obtenir une copie authentifiable de transmission est effectuée à partir d'une clé d'accès à l'original qui offre les mêmes possibilités d'obtention de copie authentifiée et/ou de copies authentifiables qu'une copie authentifiable de détention.

3. Procédé d'authentification selon la revendication 1 ou 2, **caractérisé en ce que**, lors de l'envoi du document original à l'entité de gestion d'authentification, de façon synchronisée ou non, une copie authentifiable de détention est envoyée à l'entité détentrice.

4. Procédé d'authentification selon l'une quelconque des revendications précédentes, **caractérisé en ce que** l'entité détentrice définit pour la copie authentifiable de transmission les possibilités et contraintes d'obtention de copies authentifiées et/ ou de copies authentifiables en fonction de ses choix et/ou des demandes de l'entité requérante.

5. Procédé d'authentification selon l'une quelconque des revendications précédentes, **caractérisé en ce que** la copie authentifiable de transmission comprend au moins une marque, sous la forme d'élément graphique ou d'attribut informatique permettant à un système de reproduction adapté de détecter le caractère authentifiable de ladite copie authentifiable de transmission, ladite marque pouvant être de plusieurs types et pouvant avoir des fonctions en dehors du présent procédé.

6. Procédé d'authentification selon l'une quelconque des revendications précédentes, **caractérisé en ce que** les règles soient constituées de toute information de type informatique incluant des données de référencement pointant sur des données externes au document, c'est-à-dire pouvant être traitée par un algorithme de type informatique afin de permettre à cet algorithme de répondre à une requête de reproduction sur un document authentifiable afin d'obtenir une ou des copies authentifiables et/ou une ou des copies authentifiées.

7. Procédé d'authentification selon l'une quelconque des revendications précédentes, **caractérisé en ce que** les règles peuvent être définies de façon complémentaire à des références déjà présentes sur le document original.

8. Procédé d'authentification selon l'une quelconque des revendications précédentes, **caractérisé en ce que** les règles définissent les capacités d'authentification d'un document
- soit de façon autonome
- soit en coordination avec des informations complémentaires accessibles par l'entité de gestion d'authentification, que ces informations ait été créées ou non par cette entité,
éventuellement complémentaires à d'autres données insérées naturellement dans le document sous une forme visuellement accessible ou non.

9. Procédé d'authentification d'un document selon la revendication 5, **caractérisé en ce que** la marque et/ou la règle sont des éléments graphiques lorsque la copie est de type document matériel ; un même élément graphique pouvant servir à la fois de support pour la marque et les règles.

10. Procédé d'authentification selon l'une quelconque des revendications précédentes, **caractérisé en ce que** la copie authentifiable de transmission ne comprend pas l'ensemble des données présentes sur le document original ou intègre des données non présentes sur le document original.

11. Procédé d'authentification selon l'une quelconque des revendications précédentes, **caractérisé en ce que** la copie authentifiable de transmission est numérisée par l'appareil photographique d'un appareil de type téléphone, tablette numérique ou assistant personnel, afin d'en reconnaître son caractère authentifiable et de permettre de requérir toute copie accessible à partir de ladite copie authentifiable de transmission.

12. Procédé d'authentification selon l'une quelconque des revendications précédentes, **caractérisé en ce que** les événements relatifs à une copie authentifiable sont archivés.

13. Procédé d'authentification selon l'une quelconque des revendications précédentes, **caractérisé en ce qu'**un document authentifiable est constitué par un écran de type informatique et tout type de support matériel.

14. Procédé d'authentification selon l'une quelconque des revendications précédentes **caractérisé en ce que** la marque et/ou la règle d'un document authentifiable de type électronique est matérialisée par un ou des attributs de type informatique.

15. Procédé d'authentification selon l'une quelconque des revendications précédentes **caractérisé en ce que** l'impression d'un document authentifiable sous forme électronique produit un document authentifiable sous forme matérielle,
- soit sans utilisation d'un processus d'impression spécifique, les marques et les règles étant transposées naturellement par ce processus,
- soit avec utilisation d'un processus d'impression spécifique qui permet une transposition adaptée des marques et des règles entre les deux documents.

16. Procédé d'authentification selon l'une quelconque des revendications précédentes **caractérisé en ce que** la détection par l'entité de gestion d'authentification d'une multiplicité de copies matérielles d'une même copie authentifiable entraîne des mesures de sécurité adaptées relatives à la diffusion d'authentification liée à cette copie authentifiable.

17. Procédé d'authentification selon l'une quelconque des revendications précédentes, **caractérisé en ce qu'**en complément du document original de référence associé à une copie authentifiable, d'autres documents originaux puissent lui être associés, ces documents originaux pouvant se limiter à des données de type informatique.

18. Procédé d'authentification selon l'une quelconque des revendications précédentes, **caractérisé en ce que** la création de la clé d'accès à l'original et la création du document original de référence et des autres documents originaux accessibles à partir de cette clé d'accès à l'original soit des actions non synchronisées et que la clé d'accès à l'original puisse être créée antérieurement à tout document original qui lui est accessible.

19. Procédé d'authentification selon l'une quelconque des revendications précédentes, **caractérisé en ce que** la définition des documents originaux accessibles via une clé d'accès à l'original puisse être effectuée par toute autre entité ou toute autre combinaison d'entités que l'entité émettrice du document original de référence de cette clé d'accès à l'original, de façon collaborative ou non avec cette entité émettrice.

20. Procédé d'authentification selon l'une quelconque des revendications précédentes, **caractérisé en ce que** les règles sont sous la forme d'une information qui se superpose au texte suivant des variations élémentaires des caractéristiques de celui-ci, les règles étant notamment encodées sous forme de plusieurs sous-séquences afin de faciliter leur dissémination dans le document et leur exploitation.

21. Procédé d'authentification selon l'une quelconque des revendications précédentes, **caractérisé en ce que** les sous-séquences de règles sont insérées dans le document afin d'optimiser la possibilité qu'au moins une occurrence exploitable de chaque sous-séquence soit présente sur une prise photo ou un balayage vidéo effectué par une interface de mobilité adapté.

22. Procédé d'authentification selon l'une quelconque des revendications précédentes, **caractérisé en ce que** des copies authentifiées peuvent être fournies à une entité requérante postérieurement à l'utilisation par ce dernier de sa copie authentifiable de transmission.

23. Procédé d'authentification selon l'une quelconque des revendications précédentes, **caractérisé en ce qu'**une entité requérante peut faire enregistrer une transaction en association à un document original de référence par l'utilisation de sa copie authentifiable de transmission.

24. Procédé d'authentification selon l'une quelconque des revendications précédentes, **caractérisé en ce que** l'entité de gestion d'authentification peut arbitrer les conflits d'utilisations d'un même document original via les requêtes de reproduction à partir de copies authentifiables qui lui sont soumises que ces requêtes associent ou non des transactions aux copies requises.

25. Procédé d'authentification selon l'une quelconque des revendications précédentes, **caractérisé en ce que** les caractéristiques d'une copie authentifiable en termes d'obtention de copie authentifiable et/ou de copie authentifiée peuvent être modifiées par toute entité postérieurement à sa création.

## Patentansprüche

1. Verfahren zur Authentifizierung eines Dokuments, für welches authentifizierte Kopien von anfragenden Entitäten angefordert werden können, wobei das Verfahren die folgenden Schritte aufweist:
- Erstellen eines Originals des Dokuments in Form eines elektronischen Dokuments durch die ausgebende Entität,
- Senden des Originals an eine Authentifizierungsverwaltungsentität zum Speichern des Originals an einem sicheren Speicherort,
wobei die Authentifizierungsverwaltungsentität die Ausgabe von Kopien von einem als authentifizierte Kopie bezeichneten Typ und/oder von einem als authentifizierbaren Kopie bezeichneten Typ direkt oder indirekt verwaltet,
- wobei, wenn eine Anfrage nach einer authentifizierten Kopie des Dokuments durch eine anfragende Entität an eine besitzende Entität gesendet wird, wobei eine derartige authentifizierte Kopie eine Kopie ist, deren Authentizität durch die Authentifizierungsverwaltungsentität garantiert ist,
∘ die besitzende Entität eine authentifizierbare Kopie des Dokuments, wobei jede authentifizierbare Kopie ihrem Inhaber ermöglicht, eine neue authentifizierbare und als authentifizierbare Besitzkopie bezeichnete Kopie zu definieren, oder einen Zugangsschlüssel zu dem Original besitzt,
O die authentifizierbare Kopie eine anhand des Originals erstellte Kopie ist und:
• einerseits Regeln in Form eines grafischen Elements oder eines informatischen Attributs aufweist, welche direkt oder indirekt ermöglichen, die Fähigkeiten zur Erlangung von authentifizierten Kopien und/oder von authentifizierbaren Kopien ausgehend von der authentifizierbaren Kopie zu definieren, wobei die Regeln von einem angepassten Reproduktionssystem detektierbar und auswertbar sind und an den Dokumenttyp angepasst sind: materiell oder elektronisch, und
• andererseits dem Besitzer ermöglicht, über ein angepasstes Reproduktionssystem eine oder mehrere authentifizierte Kopien und/oder eine oder mehrere authentifizierbare Kopien zu erhalten,
- Ausführen einer Reproduktionsanfrage über ein angepasstes Reproduktionssystem durch die besitzende Entität, ausgehend von ihrer authentifizierbaren Besitzkopie oder ihrem Zugangsschlüssel zu dem Original, welcher dieselben Möglichkeiten zur Erlangung einer authentifizierten Kopie und/oder authentifizierbarer Kopien bietet, um eine authentifizierbare Übertragungskopie zu erhalten,
- direktes oder indirektes Kontrollieren des angepassten Reproduktionssystems durch die Authentifizierungsverwaltungsentität, um die Regeln der authentifizierbaren Übertragungskopie zu detektieren und diese auszuwerten, um der anfragenden Entität eine authentifizierbare Übertragungskopie bereitzustellen,
wobei die Möglichkeiten zur Erlangung von authentifizierbaren Kopien und/oder authentifizierten Kopien ausgehend von dieser authentifizierbaren Übertragungskopie durch die besitzende Entität definiert sind,
- Bereitstellen einer unter direkter oder indirekter Kontrolle der Authentifizierungsverwaltungsentität ausgegebenen authentifizierten Kopie für die anfragende Entität, wenn die anfragende Entität die authentifizierbare Übertragungskopie verwendet, um eine Reproduktionsanforderung über ein angepasstes Reproduktionssystem durchzuführen.

2. Verfahren zur Authentifizierung eines Dokuments nach Anspruch 1, **dadurch gekennzeichnet, dass** die Anfrage zur Erlangung einer authentifizierten Übertragungskopie ausgehend von einem Zugangsschlüssel zu dem Original, der dieselben Möglichkeiten zur Erlangung einer authentifizierten Kopie und/oder authentifizierbarer Kopien bietet wie eine authentifizierbare Besitzkopie.

3. Verfahren zur Authentifizierung nach Anspruch 1 oder 2, **dadurch gekennzeichnet, dass**, wenn das Originaldokument an die Authentifizierungsverwaltungsentität gesendet wird, synchronisiert oder nicht synchronisiert eine authentifizierbare Besitzkopie an die besitzende Entität gesendet wird.

4. Verfahren zur Authentifizierung nach einem der vorangehenden Ansprüche, **dadurch gekennzeichnet, dass** die besitzende Entität für die authentifizierbare Übertragungskopie die Möglichkeiten und Beschränkungen für das Erhalten von authentifizierten Kopien und/oder authentifizierbaren Kopien in Abhängigkeit von ihrer Wahl und/oder den Bedürfnissen der anfragenden Entität definiert.

5. Verfahren zur Authentifizierung nach einem der vorangehenden Ansprüche, **dadurch gekennzeichnet, dass** die authentifizierbare Übertragungskopie mindestens eine Kennzeichnung in Form eines grafischen Elements oder eines informatischen Attributs aufweist, welche einem angepassten Reproduktionssystem ermöglicht, den authentifizierbaren Charakter der authentifizierbaren Übertragungskopie zu detektieren, wobei die Kennzeichnung von mehreren Arten sein kann und über das vorliegende Verfahren hinausgehende Funktionen aufweisen kann.

6. Verfahren zur Authentifizierung nach einem der vorangehenden Ansprüche, **dadurch gekennzeichnet, dass** die Regeln aus jeder Information vom informatischen Typ gebildet sind, einschließlich Referenzdaten, die auf Daten außerhalb des Dokuments verweisen, das heißt, durch einen Algorithmus vom informatischen Typ verarbeitbar sind, um diesem Algorithmus zu ermöglichen, auf eine Anfrage nach einer Reproduktion eines authentifizierbaren Dokuments zum Erhalten einer oder mehrerer authentifizierbaren Kopien und/oder einer oder mehrerer authentifizierten Kopien zu antworten.

7. Verfahren zur Authentifizierung nach einem der vorangehenden Ansprüche, **dadurch gekennzeichnet, dass** die Regeln komplementär zu auf dem Originaldokument bereits vorhandenen Referenzen definiert werden können.

8. Verfahren zur Authentifizierung nach einem der vorangehenden Ansprüche, **dadurch gekennzeichnet, dass** die Regeln die Fähigkeiten zur Authentifizierung eines Dokuments
- sei es autonom,
- sei es in Koordination mit komplementären Informationen, die für die Authentifizierungsverwaltungsentität zugängig sind, unabhängig davon, ob diese Informationen von dieser Entität erstellt wurden oder nicht, gegebenenfalls komplementär zu anderen Daten definieren, die, visuell zugängig oder nicht, naturgemäß in das Dokument eingefügt sind.

9. Verfahren zur Authentifizierung eines Dokuments nach Anspruch 5, **dadurch gekennzeichnet, dass** die Kennzeichnung und/oder die Regel grafische Elemente sind, wenn die Kopie ein materielles Dokument ist; wobei dasselbe grafische Element gleichzeitig als Träger für die Kennzeichnung und die Regeln dienen kann.

10. Verfahren zur Authentifizierung nach einem der vorangehenden Ansprüche, **dadurch gekennzeichnet, dass** die authentifizierbare Übertragungskopie nicht die Gesamtheit der auf dem Originaldokument vorhandenen Daten aufweist oder die nicht auf dem Originaldokument vorhandenen Daten integriert.

11. Verfahren zur Authentifizierung nach einem der vorangehenden Ansprüche, **dadurch gekennzeichnet, dass** die authentifizierbare Übertragungskopie durch das fotografische Gerät eines Geräts vom Typ Telefon, Tablet-Computer oder PDA digitalisiert wird, um die Authentifizierbarkeit desselben zu erkennen und zu ermöglichen, jegliche ausgehend von der authentifizierbaren Übertragungskopie zugängige Kopie anzufordern.

12. Verfahren zur Authentifizierung nach einem der vorangehenden Ansprüche, **dadurch gekennzeichnet, dass** die auf eine authentifizierbare Kopie bezogenen Ereignisse archiviert werden.

13. Verfahren zur Authentifizierung nach einem der vorangehenden Ansprüche, **dadurch gekennzeichnet, dass** ein authentifizierbares Dokument durch einen Computerbildschirm und jede Art von materiellem Träger gebildet ist.

14. Verfahren zur Authentifizierung nach einem der vorangehenden Ansprüche, **dadurch gekennzeichnet, dass** die Kennzeichnung und/oder die Regel eines authentifizierbaren Dokuments vom elektronischen Typ durch ein oder mehrere Attribute vom informatischen Typ verwirklicht sind.

15. Verfahren zur Authentifizierung nach einem der vorangehenden Ansprüche, **dadurch gekennzeichnet, dass** der Druck eines authentifizierbaren Dokuments in elektronischer Form ein authentifizierbares Dokument in materieller Form erzeugt,
- sei es ohne Verwendung eines spezifischen Druckverfahrens, wobei die Kennzeichnungen und die Regeln durch dieses Verfahren naturgemäß übertragen werden,
- sei es unter Verwendung eines spezifischen Druckvorgangs, der eine angepasste Übertragung der Marken und Regeln zwischen den beiden Dokumenten ermöglicht.

16. Verfahren zur Authentifizierung nach einem der vorangehenden Ansprüche, **dadurch gekennzeichnet, dass** das Erkennen mehrerer materieller Kopien derselben authentifizierbaren Kopie durch die Authentifizierungsverwaltungsentität angepasste Sicherheitsmaßnahmen bezüglich der mit dieser authentifizierbaren Kopie verbundenen Verbreitung der Authentifizierung zur Folge hat.

17. Verfahren zur Authentifizierung nach einem der vorangehenden Ansprüche, **dadurch gekennzeichnet, dass** in Ergänzung des einer authentifizierbaren Kopie zugeordneten Referenz-Originaldokuments andere Originaldokumente diesem zugeordnet werden können, wobei diese Originaldokumente sich auf Computerdaten beschränken können.

18. Verfahren zur Authentifizierung nach einem der vorangehenden Ansprüche, **dadurch gekennzeichnet, dass** das Erzeugen des Zugangsschlüssels zu dem Original und die Erzeugung des Referenz-Originaldokuments und der anderen Originaldokumente, welche ausgehend von diesem Zugangsschlüssel zu dem Original zugängig sind, nicht synchronisierte Aktionen sind, und dass der Zugangsschlüssel zu dem Original vor jeglichem, für diesen zugängigen Originaldokument erzeugt werden kann.

19. Verfahren zur Authentifizierung nach einem der vorangehenden Ansprüche, **dadurch gekennzeichnet, dass** das Definieren von Originaldokumenten, welche ausgehend von dem Zugangsschlüssel zu dem Original zugängig sind, durch jede andere Entität oder jede andere Kombination von Entitäten als die das Referenz-Originaldokument zu diesem Zugangsschlüssel zu dem Original ausgebende Entität, entweder in Zusammenarbeit mit dieser ausgebenden Entität oder nicht, durchgeführt werden kann.

20. Verfahren zur Authentifizierung nach einem der vorangehenden Ansprüche, **dadurch gekennzeichnet, dass** die Regeln in Form einer Information vorliegen, die einen Text gemäß elementaren Variationen von Merkmalen desselben überlagern, wobei die Regeln insbesondere in Form mehrerer Untersequenzen codiert werden, um deren Streuung in dem Dokument und deren Auswertung zu erleichtern.

21. Verfahren zur Authentifizierung nach einem der vorangehenden Ansprüche, **dadurch gekennzeichnet, dass** die Untersequenzen von Regeln in das Dokument eingefügt werden, um die Möglichkeit zu optimieren, dass mindestens ein auswertbares Auftreten jeder Untersequenz in einer fotografischen Aufnahme oder einer von einer angepassten Mobilitätsschnittstelle durchgeführten Videoabtastung vorhanden ist.

22. Verfahren zur Authentifizierung nach einem der vorangehenden Ansprüche, **dadurch gekennzeichnet, dass** authentifizierte Kopien an eine anfragende Entität ausgegeben werden kann, nachdem diese ihre authentifizierbare Übertragungskopie verwendet hat.

23. Verfahren zur Authentifizierung nach einem der vorangehenden Ansprüche, **dadurch gekennzeichnet, dass** eine anfragende Entität eine Transaktion in Verbindung mit einem Referenz-Originaldokument durch die Verwendung ihrer authentifizierbaren Übertragungskopie registrieren lassen kann.

24. Verfahren zur Authentifizierung nach einem der vorangehenden Ansprüche, **dadurch gekennzeichnet, dass** die Authentifizierungsverwaltungsentität Konflikte durch die Benutzung desselben Originaldokuments über die Reproduktionsanfragen ausgehend von authentifizierbaren Kopien, welche dieser vorgelegt werden, schlichten kann, unabhängig davon, ob die Anfragen den angefragten Kopien Transaktionen zuordnen oder nicht.

25. Verfahren zur Authentifizierung nach einem der vorangehenden Ansprüche, **dadurch gekennzeichnet, dass** die Merkmale einer authentifizierbaren Kopie in Bezug auf das Erhalten einer authentifizierbaren Kopie und/oder einer authentifizierten Kopie von jeder Entität nach deren Erstellung geändert werden können.

## Claims

1. Method for authenticating a document for which authenticated copies may be requested by requesting entities, comprising the following steps:
- creating an original of the document in electronic document form by an issuing entity;
- sending of said original to an authentication management entity so that the original be stored in a secure storage site,
which authentication management entity directly or indirectly manages a delivery of copies of an authenticated copy type and/or of a authenticatable copy type,
- upon a request, by a requesting entity to an owning entity, of a request for an authenticated copy of said document, an authenticated copy being a copy the authenticity of which is guaranteed by the authentication management entity,
∘ which owning entity holds an authenticated copy of said document, any authenticatable copy enabling its holder to define a new authenticatable copy and being called authenticatable ownership copy, or a key for access to the original,
∘ which authenticatable copy is a copy produced on the basis of said original and which:
▪ on a one hand includes rules, in the form of graphical element or of attribute of computing type, which enable to directly or indirectly define capacities for obtaining authenticated copies and/or authenticatable copies on the basis of said authenticatable copy,
said rules being detectable and utilizable by a tailored reproduction system and being tailored to the type of document:
material or electronic, and
▪ on an other hand enables its holder to obtain via a tailored reproduction system one or more authenticated copies and/or one or more authenticatable copies,
- the owning entity makes a request for reproduction via a tailored reproduction system, on the basis of its authenticatable ownership copy or of its key for access to the original which provides the same capacities for obtaining authenticated copies and/or authenticatable copies, so as to obtain an authenticatable transmission copy,
- control of the tailored reproduction system, directly or indirectly, by the authentication management entity so as to detect the rules of the authenticatable transmission copy, and to utilize them for providing to the requesting entity an authenticatable transmission copy,
capacities for obtaining authenticatable copies and/or authenticated copies on the basis of this authenticatable transmission copy being defined by the owning entity,
- providing to the requesting entity an authenticated copy, delivered under direct or indirect control of the authentication management entity, when the requesting entity uses this authenticatable transmission copy for making a reproduction request via a tailored reproduction system.

2. Method for authenticating a document according to claim 1, **characterized in that** the request to obtain an authenticatable transmission copy is performed on the basis of a key for access to the original which provides the same capacities for obtaining an authenticated copy and/or authenticatable copies as an authenticatable ownership copy.

3. Authentication method according to claim 1 or 2, **characterized in that**, during the sending of the original document to the authentication management entity, in a synchronized manner or not, an authenticatable ownership copy is dispatched to the owning entity.

4. The authentication method as claimed in any one of the preceding claims, **characterized in that** the owning entity defines for the authenticatable transmission copy the possibilities and constraints for obtaining authenticated copies and/or authenticatable copies as a function of its choices and/or of the requests of the requesting entity.

5. Authentication method according to any one of the preceding claims, **characterized in that** the authenticatable transmission copy comprises at least one mark allowing, in the form of a graphical element or of an attribute of computing type that enables a tailored reproduction system to detect the authenticatable character of said authenticatable copy, said mark being possibly of several types and possibly having functionalities outside the current method.

6. Authentication method according to any one of the preceding claims, **characterized in that** the rules are made of any information of computing type that includes referencing data pointing on data outside the document, that is to say that is able to be processed by an algorithm of computing type so as to allow this algorithm to respond to a request for reproduction on an authenticatable document so as to obtain one or more authenticatable copies and/or one or more authenticated copies.

7. Authentication method according to any one of the preceding claims, **characterized in that** the rules can be defined in a manner complementary to references already present on the original document.

8. Authentication method according to any one of the preceding claims, **characterized in that** the rules define the capacities for authentication of a document
- either in an autonomous manner
- or in coordination with complementary information accessible by the authentication management entity whether or not this information has been created by this entity,
optionally complementary to other data inserted naturally into the document in a visually accessible form or not.

9. Method for authenticating a document according to claim 5, **characterized in that** the mark and/or the rule is a graphical element when the copy is of material document type ; a single graphical element being able to be used as a support for both the mark and the rules.

10. Authentication method according to any one of the preceding claims, **characterized in that** the authenticatable transmission copy does not comprise the whole set of the data present on the original document or integrates data that is not present on the original document.

11. Authentication method according to any one of the preceding claims, **characterized in that** the authenticatable transmission copy is digitized by the photographic apparatus of an apparatus of telephone, digital tablet or personal assistant type, so as to recognize its quality of being authenticatable and making it possible to request any copy that may be obtained from authenticatable transmission copy.

12. Authentication method according to any one of the preceding claims, **characterized in that** the events relating to an authenticatable copy are archived.

13. Authentication method according to any one of the preceding claims, **characterized in that** an authenticatable document consists of a computer type screen and of any type of hardware support.

14. Authentication method according to any one of the preceding claims, **characterized in that** the mark and/or the rule of an authenticatable document of electronic type is materialized by one or more attributes of computing type.

15. Authentication method according to any one of the preceding claims, **characterized in that** the printing of an authenticatable document in electronic form produces an authenticatable document in hardware form,
- either without use of a specific printing process, the marks and the rules being transposed naturally by this process,
- or with use of a specific printing process which allows a tailored transposition of the marks and rules between the two documents.

16. Authentication method according to any one of the preceding claims, **characterized in that** the detection by the authentication management entity of a multiplicity of material copies of a single authenticatable copy gives rise to tailored security measures relating to the dissemination of authentication linked with this authenticatable copy.

17. Authentication method according to any one of the preceding claims, **characterized in that** as a supplement to the reference original document associated with an authenticatable copy, other original documents may be associated therewith, these original documents possibly being limited to data of computing type.

18. Authentication method according to any one of the preceding claims, **characterized in that** the creation of the key for access to the original and the creation of the reference original document and of the other original documents accessible on the basis of this key for access to the original are unsynchronized actions and that the key for access to the original can be created prior to any original document which is accessible to it.

19. Authentication method according to any one of the preceding claims, **characterized in that** the definition of the original documents accessible via a key for access to the original can be performed by any entity or any other combination of entities other than the entity issuing the reference original document of this key for access to the original, in a manner collaborative or non-collaborative with this issuing entity.

20. Authentication method according to any one of the preceding claims, **characterized in that** the rules are in the form of an information item which is superimposed on the text in accordance with elementary variations of the characteristics of the latter, the rules being in particular encoded in the form of a number of sub-sequences so as to facilitate their dispersal in the document and their utilization.

21. Authentication method according to any one of the preceding claims, **characterized in that** the sub-sequences of rules are inserted into the document so as to optimize the possibility that at least one utilizable occurrence of each sub-sequence is present on a photo shot or a video scan performed by a tailored mobility interface.

22. Authentication method according to any one of the preceding claims, **characterized in that** authenticated copies can be provided to a requesting entity subsequent to the use by the latter of its authenticatable transmission copy.

23. Authentication method according to any one of the preceding claims, **characterized in that** a requesting entity can have a transaction be recorded in association with a reference original document by using its authenticatable transmission copy.

24. Authentication method according to any one of the preceding claims, **characterized in that** the authentication management entity can arbitrate the conflicts of use of one and the same original document via the requests for reproduction on the basis of authenticatable copies which are submitted to it whether or not these requests associate transactions with the requested copies.

25. Authentication method according to any one of the preceding claims, **characterized in that** the characteristics of an authenticatable copy in terms of obtaining an authenticatable copy and/or authenticated copy can be modified by any entity subsequent to its creation.
